(19) Europäisches Patentamt / European Patent Office / Office européen des brevets

(11) **EP 4 369 234 A1**

(12) **EUROPEAN PATENT APPLICATION**

(43) Date of publication:
**15.05.2024 Bulletin 2024/20**

(21) Application number: **22206498.2**

(22) Date of filing: **09.11.2022**

(51) International Patent Classification (IPC):
**G06F 21/60** *(2013.01)* **H04L 9/32** *(2006.01)*
**H04L 9/30** *(2006.01)*

(52) Cooperative Patent Classification (CPC):
**G06F 21/602; H04L 9/3066; H04L 9/3247**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Nagravision Sarl**
**1033 Cheseaux-sur-Lausanne (CH)**

(72) Inventors:
• **MACCHETTI, Marco**
**1033 CHESEAUX-SUR-LAUSANNE (CH)**
• **SIMON, Clement**
**1033 CHESEAUX-SUR-LAUSANNE (CH)**
• **TONGIANI, Claudio**
**1033 CHESEAUX-SUR-LAUSANNE (FR)**
• **VILLEGAS, Karine**
**1033 CHESEAUX-SUR-LAUSANNE (CH)**

(74) Representative: **Ipside**
**7-9 Allée Haussmann**
**33300 Bordeaux Cedex (FR)**

(54) **DEVICES AND PROCESSES FOR GENERATING PUBLIC KEYS AND FOR GENERATING AND VERIFYING SIGNATURES**

(57) A public key $(Kpub_{Ed})$ is generated (6, 60) from a private key $(Kpriv)$ in elliptic curve cryptography, by getting a scalar multiplication $(s.G_{Ed})$ on a first elliptic curve of a twisted Edwards type, of a first base point $(G_{Ed})$ on that first elliptic curve by a scalar $(s)$ derived from the private key. It is proceeded (603) with a scalar multiplication $(s.G_M)$ on a second elliptic curve of a Montgomery type birationally equivalent to the first elliptic curve via an isomorphism, of a second base point $(G_M)$ on the second elliptic curve corresponding to the first base point with respect to that isomorphism, by an adjusted scalar, and a resulting point is converted (604) to the scalar multiplication on the first elliptic curve by an isogeny. Signature generation and verification are exploiting similar principles.

Applications to authentication.

Fig 9

**Description**

**TECHNICAL FIELD**

The invention relates to authentication in the cryptography field, and regards more particularly elliptic-curve cryptography.

**BACKGROUND ART**

Public-key cryptography, or asymmetric cryptography, involves key pairs, each comprising a private key known only by the key owner and an associated public key that may be distributed to others without compromising security.
Elliptic-curve cryptography (ECC) is a particular form of public-key cryptography relying on elliptic curves over finite base fields, an elliptic curve being a smooth, projective, algebraic curve of genus one over the finite field, including a specific point. ECC principles leverage the intractability of finding the discrete logarithm of a random elliptic curve element with respect to a publicly known base point (i.e. the ECDLP problem for "Elliptic Curve Discrete Logarithm Problem").
In this respect, as known to a skilled person, the addition of two distinct points on an elliptic curve involves an intersection with the elliptic curve of a straight line defined by the two points, while the addition of a same point to itself, called point doubling, involves an intersection with the elliptic curve of the tangent to the elliptic curve at that point. Elliptic curve point multiplication then designates a possibly repeated addition of a point to itself along that curve, the multiplication having a scalar integer factor consisting in the number of times the point appears in the addition (i.e. the number of additions plus one). In point doubling, for example, the factor is worth 2, which is the smallest potential value. In what follows, such a scalar-point multiplication will be currently designated as "scalar multiplication".
The discrete logarithm problem amounts to identifying the multiplication scalar factor (the multiplicand) from the iteratively added point and the resulting scalar product point. Since the addition of two points (which may be a same point) has a position on the curve that has no obvious relationship with the positions of the added points on the curve, repeating such addition operations can make the finding of the multiplication factor complex enough for being intractable in practice.
ECC has particularly interesting applications in authentication, in which a digital signature is used for verifying the authenticity (creation by a known sender) and integrity (no message alteration) of digital messages, hereinafter globally referred to by message authenticity. A digital signature scheme relies on asymmetric cryptography and typically includes three parts: 1/ a key pair generation, comprising the random or pseudo-random selection of a private key and the determination of a public key associated with the private key; 2/ a signature generation applied to a given message by means of the private key; and 3/ a signature verification checking the message authenticity on the ground of the public key and of the signature.
Among the ECC methods developed for digital signatures, the Elliptic Curve Digital Signature Algorithm (ECDSA) exploits the discrete logarithm problem by using an elliptic curve and a base point of prime order on the curve. The creation of a key pair involves a randomly selected private key integer and an induced public key curve point given by the scalar multiplication of the base point by that private key. The signature of a given message, consisting in a pair of numbers, is then obtained by an algorithm applied to the message and involving the base point, the private key integer and a nonce (i.e. an arbitrary number provided for being used just once in cryptographic communications) consisting in a randomly selected integer, as known to a skilled person. For safety and avoiding leakages, the nonce is renewed for each different signature. On the signature verification side, the retrieved signature and public key are used to check the message authenticity by verifying the equality of terms involving proper respective scalar multiplications of the base point and of the public key curve point.
Instead of introducing the randomly selected integer as the nonce, it has been proposed to derive the signatures in a deterministic way from the message and the secret key, as developed by IETF (the Internet Engineering Task Force) in RFC 6979 (Request For Comments) "Deterministic Usage of the Digital Signature Algorithm (DSA) and Elliptic Curve Digital Signature Algorithm (ECDSA)", T. Pornin, ISSN 2070-1721, 2013. Accordingly, the potentially exposed ECDSA random number generation is bypassed, thereby enabling to strengthen the security of the system with respect to e.g. faulty random number generators.
An alternative ECC method, Edwards-curve Digital Signature Algorithm (EdDSA), based on a twisted Edwards curve over a finite field of prime order and on a base point on that curve, also exploits a private key integer and a public key curve point, the latter being given by the scalar multiplication of the base point by an integer factor derived from the private key. The signature comprises a pair of a curve point and a number, both being computed from the message, the private key and the base point in a deterministic way (a nonce is derived deterministically from the private key and the message). The signature verification relies on verifying the equality of terms involving proper respective scalar multiplications of the base point, the public key curve point and the signature curve point, the related integer factors being derived from the message, the signature and the public key. The EdDSA process is standardized by IETF in RFC 8032, "Edwards-Curve Digital Signature Algorithm (EdDSA)", S. Josefsson and I. Liusvaara, ISSN 2070-1721, 2017. Further to being deterministic, it eliminates many risks of implementation pitfalls due to its robustness-by-design concept.

An elliptic curve can be usually expressed as a plane algebraic curve (corresponding to the zero set of a polynomial in two variables) in a standard form involving two affine coordinates and two coefficients, called a short Weierstrass normal form, the associated specific point being at infinity and corresponding to the additive identity. In this normal form, the two coefficients are chosen so that the curve is non-singular (no cusps nor self-intersections) and the field over which the curve is defined has a characteristic differing from 2 and 3 (the characteristic being defined as the smallest number of additions of the multiplicative identity element to get the additive identity, the multiplicative identity element presently corresponding to the base point). Normal representations of non-singular elliptic curves over fields having a characteristic equal to 2 or 3 are also possible, subject to relying on more than two coefficients (three coefficients for characteristic 3, and 5 coefficients for characteristic 2).

Alternative expressions are however widely used and facilitate the implementation of various computation methods.

Among the various elliptic curves (namely, elliptic curve expressions) having attracted attention and interest due to their efficiency and reliability in digital authentication, two families have been particularly exploited: Montgomery curves and Edwards curves.

The Montgomery curves are appreciated notably for enabling regular and particularly efficient computations expressed in projective homogeneous coordinates instead of the affine coordinates (in which the two first projective coordinates are given by multiplying the affine coordinates by an introduced third projective coordinate), thereby preventing costly field inversions. More precisely, symmetries make possible computations based on only two of the three projective coordinates, and a particular algorithm known as the Montgomery ladder and described e.g. by P. L. Montgomery in "Speeding the Pollard and Elliptic Curve Methods of Factorization", Math. of Computation, Vol. 48, No 177, pp. 243-264, 1987, allows scalar-point multiplication in a fixed amount of time whether in distinct addition mode or in doubling mode. The latter property proves advantageous for turning down side-channel attacks, in which timing or power consumption measurements are exploited by an attacker for extorting information.

The twisted Edwards curves are important in public key ECC and are at the core of the EdDSA method - the (simple) Edwards curves amounting to particular twisted Edwards curves in which only one coefficient is used instead of two. They offer the advantageous property of having generic addition formulas applying to distinct points as well as to doubling (i.e. unified addition law), thereby simplifying protection against side-channel attacks. Also, the addition computations usually prove specially fast. Like with Montgomery curves, the exploitation of projective homogeneous coordinates instead of the affine coordinates enables to prevent costly field inversions.

The elliptic curves in their Montgomery form and twisted Edwards form are birationally equivalent (except for singular points), which means that conversions from either of those forms to the other is possible via a rational map, namely based on a function defined by a rational fraction over the finite field of the function domain curve (i.e. an algebraic fraction having both the numerator and denominator which are polynomials and have coefficients in that finite field), thereby inducing an isomorphism between Montgomery curves and twisted Edwards curves. Rational maps further enable to transform Montgomery curves and twisted Edwards curves into corresponding Weierstrass forms, though reverse rational maps require some specific conditions. The birational equivalences between Montgomery curves and twisted Edwards curves facilitate the development of corresponding methods in both forms.

As known to the skilled person, twisted Edwards curves tend to be rather used today for digital signatures, due notably to existing particularly efficient algorithms for double-base scalar multiplications (i.e. scalar multiplications involving the computation of two scalar multiplications and the addition of the results). On the other hand, Montgomery curves tend to be privileged in Diffie-Hellman key exchange schemes (ECDH for "Elliptic-Curve Diffie Hellman") used in fast secure channel establishment between two parties in determining a symmetric key cipher for later exchanges, due notably to existing very simple, constant-time and fast scalar multiplications (single-base, i.e. without a further addition of scalar product results).

For example, Curve25519 is a Montgomery curve defined over a prime field defined by the prime number $2^{255}$ - 19 (hence its name) and potentially offering 128 bits of security (corresponding to 256 bits key size), while Curve448 is defined over a prime field defined by the Solinas trinomial prime number $2^{448}$ - $2^{224}$ - 1 and potentially offering 224 bits of security, the corresponding ECDH functions being respectively named X25519 and X448. Both are described notably by IETF in RFC 7748, "Elliptic Curves for Security", A. Langley et al., ISSN 2070-1721, 2016.

Similarly, Ed25519 is an EdDSA signature scheme using a twisted Edwards curve birationally equivalent to Curve25519, adapted to 256 bits long public keys and to 512 bits long signatures, while Ed448 is an EdDSA signature scheme using a twisted Edwards curve birationally equivalent to Curve448, adapted to 456 bits long public keys and to 912 bits long signatures. Both are described notably by IETF in the above-cited RFC 8032. For sake of convenience, in what follows, Ed25519 will be used for referring to the twisted Edwards curve birationally equivalent to Curve25519.

Given the high needs for security and authentication efficiency in computation speeds and resources, it appears desirable to still enhance the available digital signature schemes beyond those currently based on twisted Edwards curves like EdDSA, and to some extent those based on Montgomery curves.

## SUMMARY

A purpose of the present disclosure is to provide a family of digital signature schemes, suited to potentially still improving the computation performance compared with existing methods based on twisted Edwards curves, whether for public key generation, signature generation or signature verification.

A further object of the present disclosure is a family of methods making possible compatibility with existing EdDSA processes and devices, such as e.g. Ed25519, and with other digital signature solutions based on twisted Edwards curves.

The present disclosure is also directed to securing operations by potentially reduced risks of side-channel and fault attacks.

The present disclosure may apply at any digital signature steps separately or cumulatively, including public key generation, signature generation and signature verification.

### *Preliminary definitions*

In the present disclosure, *"digital communications"* refer to the transfer and reception of data in the form of a digital bitstream or a digitized analog signal, either over a point-to-point or a point-to-multipoint communication channel, or via data recording on a storage medium and data retrieval from that medium. Related communication channels may be of any form, e.g. wireless using radio, microwave or infrared spectrum, optical fibers, copper wires, or computer buses. Related storage media may also be of any form, e.g. optical disks, magnetic tapes, HDD (Hard-Disk Drives), SSD (Solid-State Drives), semiconductor memory, flash memory, DNA/RNA molecules.

*"Modular arithmetic"* is a system of arithmetic for integers based on a modulus (an integer greater than 1), in which two numbers are said *congruent* modulo the modulus (also noted "mod" the modulus) if the modulus is a divisor of their difference. This defines an equivalence relation compatible with the operations of addition, subtraction and multiplication (or exponentiation by an integer greater than 1). Also, *"modular inversion"* of an integer amounts to finding a modular multiplicative inverse of that integer, so that the product of those two numbers is worth 1 modulo the modulus. Insofar as the modulus is prime, modular inversion is possible for all integers not congruent to zero. In digital computations, modular inversion is usually much more demanding than additions, subtractions or multiplications, so that it proves efficient to avoid them as much as possible. Typically and in a purely indicative way, in modular arithmetic on 256 bits, an addition or a subtraction may require 208 cycles, a multiplication or squaring 480 cycles, and a modular inversion around 100,000 cycles. In the ECC context, a finite field over which an elliptic curve is defined satisfies modular arithmetic.

*"Affine coordinates"* are coordinates of a point in an affine frame of an affine space, that affine frame comprising an origin in the affine space and a linear basis of an associated vector space. In ECC, an elliptic curve is determined as a plane curve over a finite field, the plane curve extending in an affine space having an affine frame.

*"Homogeneous coordinates"* refer to point coordinates in a geometrical space, in which multiplying all point coordinates by a same non-zero scalar leaves the point unchanged. In particular, they allow to represent points at infinity using finite coordinates. Homogeneous coordinates may be derived from affine coordinates by adding a dimension via a complementary homogeneous coordinate, and by multiplying the existing affine coordinates by that complementary homogeneous coordinate. Alternatively, they may be derived by dividing the existing affine coordinates by a complementary (non-zero) homogeneous coordinate. In what follows, in line with some widespread notations, colons are used instead of commas for distinguishing homogeneous coordinates with respect to affine coordinates, e.g. (x,y) for affine coordinates and (X:Y:Z) for homogeneous coordinates, with $x = X/Z$ and $y = Y/Z$.

*"Projective coordinates"* are often, by not always, used as a synonymous of homogeneous coordinates. Presently, they are more generally defined as coordinates exploited in projective geometry, i.e. the study of geometric properties invariant with respect to projective transformations, also called homographies (isomorphisms of projective spaces, a projective space being an affine space with points at infinity so that each direction of parallel lines is associated with one point at infinity). Projective coordinates may e.g. consist in homogeneous coordinates or Jacobian coordinates (such that for affine coordinates (x, y), the projective coordinates are X, Y, Z so that $x = X/Z^2$ and $y = Y/Z^3$).

*"Expanded coordinates"* presently refer to a transformation and an extension of affine coordinates, enabling to avoid or reduce divisions in solving targeted equations, hence to turn down modular inversion operations in related modular arithmetic. They encompass homogeneous coordinates, other projective coordinates and further system representations. In the ECC context, expanded coordinates are suited to solving polynomial equations defining elliptic curves in an affine system, and prove particularly useful for computational performance. The same notation as mentioned above for homogeneous coordinates (with colons) will be presently adopted more generally for expanded coordinates.

For example, (x, y) being affine coordinates, homogeneous coordinates can be given by (X:Y:Z) with $x = X/Z$ and $y = Y/Z$; Jacobian coordinates by (X:Y:Z) with $x = X/Z^2$ and $y = Y/Z^3$; Lopez-Dahab coordinates by (X:Y:Z) with $x = X/Z$ and $y = Y/Z^2$; modified Jacobian coordinates by (X:Y:Z:T) with $x = X/Z^2$, $y = Y/Z^3$, $T = aZ^4$; Chudnovsky Jacobian coordinates by (X:Y:Z:T:U) with $x = X/Z^2$, $y = Y/Z^3$, $T = Z^2$, $U = Z^3$. The terms "expanded coordinates" may further refer to any combination of the above systems.

An *"elliptic curve"*, in the ECC context, can be defined as a plane curve over a finite field (also called a Galois field), that curve being possibly defined with parameters a and b in an affine frame corresponding to affine coordinates (x, y), as (in short Weierstrass normal form):

$$y^2 = x^3 + ax + b \qquad\qquad (1)$$

and being equipped with a specific point at infinity. The finite field is giving a set of points on the curve, which form a group having the point at infinity as the additive identity element. In the prime case, the finite field comprises the integers modulo a prime number p. The elliptic curve is further provided with a *"base point'* G, also called a *"generator"*, used in combination with the addition law on the elliptic curve in relation with the finite field for generating the relevant points of the elliptic curve. Those points generated by the base point form a cyclic subgroup of elements, the number of which being the *"order"* n of G (i.e. the smallest positive number of added G for obtaining the point at infinity, which is the additive identity element). The order n divides the cardinality of the finite field (by Lagrange's theorem), the ratio being called the *"cofactor"* h.

*"Domain parameters"* in ECC are elements defining an elliptic curve, and include the constants a and *b*, the prime number p in the prime case, the base point G, the order n and the cofactor h.

*"Code exponentiation",* merely designated below as *"exponentiation",* designates in ECC the reconstitution of an elliptic curve point by decoding a number resulting from previously encoding the point. It is carried out by relying on the belonging of the point to the elliptic curves - e.g. the decoded number comprises the bits of the y coordinates and one further bit gives the sign of the x coordinate. The transformation of elliptic curve points to numbers enables to facilitate the transfer of information, and to reduce their related size. ECC exponentiation is notably exploited for transmitting a public key, or part of a signature pertaining to an elliptic curve point, and is a relatively expensive operation. Typically and in a purely indicative way, in modular arithmetic on 256 bits, an exponentiation may require 110,000 cycles.

The *"Montgomery ladder"* is an ECC algorithm enabling to compute scalar multiplications in a fixed amount of time, whatever the value of the scalar multiplicand. It is therefore protective against potential side-channel attacks, which are based on timing or power leakages. It was disclosed in the seminal above-cited article by P. L. Montgomery dedicated to the factorization of large numbers, and is applicable to various kinds of elliptic curves, including Montgomery curves and twisted Edwards curves. It was further developed in a more complete way in the case of Montgomery curves by K. Okeya and K. Sakurai in "Efficient Elliptic Curve Cryptosystems from a Scalar Multiplication Algorithm with Recovery of the y-Coordinate on a Montgomery-Form Elliptic Curve", CHES 2001, LNCS 2162, pp. 126-141, 2001. The application of the Montgomery ladder appears particularly efficient when applied to Montgomery curves, because only the first affine coordinate x (i.e. the first and third projective homogeneous coordinates U and Z) is required, not the second affine coordinate y. Since the latter can however be necessary, specific methods have been developed for recovering it, in particular as formulated in the above article by K. Okeya and K. Sakurai. Particularities of such recovering include the use of affine coordinates (u, v) of a point P as inputs together with the first and third homogeneous coordinates (U1, Z1) and (U2, Z2) of two respective ladder points *P*1 and *P*2, the points P, *P*1 and *P*2 being linked by a point addition (*P2 = P1 + P*).

An *"isomorphism"* between two elliptic curves is a structure-preserving mapping between those structures, i.e. a *"homomorphism",* which can be reversed by an inverse mapping. A homomorphism between elliptic curves is an isomorphism if and only if it is bijective.

A *"rational function"* over a field is a function that can be defined by a rational fraction over that field, that rational fraction consisting in an algebraic fraction in which both the numerator and denominator are polynomials having their coefficients in that field.

A *"rational map"* from a first elliptic curve to a second elliptic curve is a morphism from a non-empty subset of the first elliptic curve to the second elliptic curve. It can be written in coordinates using rational functions.

Such a rational map is a *"birational map"* insofar as there exists a rational map from the second elliptic curve to the first elliptic curve, inverse to the previous rational map. That birational map induces an isomorphism from a non-empty open subset of the first elliptic curve to a non-empty open subset of the second elliptic curve, the first elliptic curve and the second elliptic curve being then said birationally equivalent.

An *"isogeny"* from a first elliptic curve to a second elliptic curve defined over a field and having respectively a first point at infinity and a second point at infinity, is a non-constant morphism of curves from the first elliptic curve to the second elliptic curve, which maps the first point at infinity to the second point at infinity. It deserves noting that an isogeny is not necessarily an isomorphism, since it may have a non-trivial kernel. Such an isogeny can be expressed by rational functions for each of the affine coordinates.

First and second elliptic curves having an isogeny between them are said *isogenous.*

The *"degree"* of an isogeny is given by the maximum of the degrees of the polynomials at the numerator and denominator of the x-affine coordinate.

The terms *"adapted"* and *"configured"* are used in the present disclosure as broadly encompassing initial configuration, later adaptation or complementation of the present device, or any combination thereof alike, whether effected through material or software means (including firmware).

The term *"processor"* should not be construed to be restricted to hardware capable of executing software, and refers in a general way to a processing device, which can for example include a computer, a microprocessor, an integrated circuit, or a programmable logic device (PLD). The processor may also encompass one or more Graphics Processing Units (GPU), whether exploited for computer graphics and image processing or other functions. Additionally, the instructions and/or data enabling to perform associated and/or resulting functionalities may be stored on any processor-readable medium such as, e.g., an integrated circuit, a hard disk, a CD (Compact Disc), an optical disc such as a DVD (Digital Versatile Disc), a RAM (Random-Access Memory) or a ROM (Read-Only Memory). Instructions may be notably stored in hardware, software, firmware or in any combination thereof.

Additional terms will be defined, specified or commented wherever useful throughout the following description.

### Objects of the disclosure

An object of the present disclosure is notably a device for generating a public key from a private key in elliptic curve cryptography (ECC). The device includes:

- at least one input adapted to receive data representative of the private key, and at least one parameter defining a first elliptic curve on a finite field having a field order and a first base point located on that first elliptic curve, the first elliptic curve being of a twisted Edwards curve type,
- at least one processor configured for computing data representative of the public key from the data representative of the private key, by getting a scalar multiplication on the first elliptic curve of the first base point by a scalar derived from the private key,
- at least one output adapted to provide the data representative of the public key for securing digital communications.

According to the disclosure:

- the input(s) is/are adapted to receive at least one parameter, defining a second elliptic curve birationally equivalent to the first elliptic curve via an isomorphism and a second base point located on the second elliptic curve and corresponding to the first base point with respect to that isomorphism, the second elliptic curve being of a Montgomery curve type,
- the processor(s) is/are configured for proceeding with a scalar multiplication on the second elliptic curve of the second base point by at least one adjusted scalar among the scalar derived from the private key and at least one division modulo the field order of that scalar by respectively at least one adjustment integer greater than 1, the adjustment integer being worth 1 when the adjusted scalar consists in the scalar, and for converting a resulting point of the scalar multiplication on the second elliptic curve to the scalar multiplication on the first elliptic curve by at least one isogeny, the latter having a degree equal to respectively the adjustment integer(s) and mapping the second base point to at least one scalar multiplication of the first base point by respectively the adjustment integer(s).

Accordingly, the scalar multiplication on the first elliptic curve is obtained indirectly, via the scalar multiplication on the second elliptic curve and the conversion to the first elliptic curve.

The device for generating a public key thus hinges on a combination of a Montgomery curve approach and a twisted Edwards curve approach. Unexpectedly, compared with existing alternatives between schemes based on Montgomery curves, Edwards curves or other elliptic curve families, the present solution involves the joined consideration of two kinds of elliptic curves together.

In addition, as regards the entries and outcomes, the device for generating a public key basically behaves like a traditional device relying on a twisted Edwards curve in producing the public key, like e.g. with an EdDSA algorithm. In particular, the scalar multiplication executed on the Montgomery curve and converted back to the twisted Edwards curve may exactly amount to a corresponding scalar multiplication executed on the twisted Edwards curve, due to the isomorphism relationship between the Montgomery curve and the twisted Edwards curve.

In this respect, the device may be fully integrated in existing authentication systems based on twisted Edwards curves. However, the background computation operations may be substantially modified, since by contrast with the above observation on the entries and outcomes, they involve scalar multiplications possibly carried out entirely on a Montgomery curve via a forth and back process.

This surprising mix may, in some implementations, significantly enhance the computational performance of the public key generation compared with a traditional device based on a twisted Edwards curve, thereby expanding the benefits of each of the Montgomery curve and twisted Edwards curve schemes considered separately.

Such a scalar multiplication on a Montgomery curve may further be performed using a regular scalar point multiplication algorithm with an invariant, Montgomery ladder, so that risks of side-channel attacks can be mitigated.

In addition, using a Montgomery ladder on a Montgomery curve (instead of on the twisted Edwards curve) may in some modes enable to obtain a globally reduced code size with respect to pure Edwards curve implementations, being thereby potentially relevant notably to low-cost devices.

By contrast, speeding up Edwards curve computations to high efficiency levels could also be performed, but subject to significant RAM and code increases, thus leading to higher cost devices.

In some implementations, the first elliptic curve and the second elliptic curve are defined over a finite field having a prime order (i.e. a prime field). In alternative implementations, they are defined over a binary field.

When the adjustment integer is worth 1, since the first elliptic curve and the second elliptic curve are birationally equivalent via an isomorphism, the processor(s) may be configured for converting the resulting point from the second elliptic curve to the first elliptic curve by an inverse mapping of that isomorphism.

In some embodiments, the exploited Montgomery curve and associated twisted Edwards curve have known domain parameters, including notably the first and second base points. It is thus possible to proceed directly with the scalar multiplication on the second elliptic curve without carrying out preliminary operations on the first elliptic curve. Only the conversion in one direction may thus be needed, from the second elliptic curve to the first elliptic curve - which pertains to the resulting point.

In variants, at least part of the domain parameters of the exploited Montgomery curve and/or associated twisted Edwards curve need to be constructed, consistently between the two curves. In some implementations of such variants, data regarding the first base point are notably communicated so that the second base point can be determined.

In some implementations, the adjustment integer is always 1, so that the adjusted scalar consists in the scalar itself and the isogeny from the Montgomery curve to the twisted Edwards curve is the inverse mapping of the isomorphism.

In other implementations, the processor(s) is/are configured for the adjustment integer being greater than 1, and for obtaining the effective value before operation from data stored, user-entered, or received via a communication network.

In still alternative modes, the processor(s) is/are configured for dealing with at least two adjustment integers, advantageously including 1, and for selecting the exploited adjustment integer on the ground of received instructions, e.g. user-entered via a user interface, or received from a communication network.

Another object of the present disclosure is a device for generating a signature associated with a message from a private key in ECC. That device includes:

- at least one input adapted to receive data representative of the private key and of that message, and at least one parameter, defining a first elliptic curve on a finite field having a field order and a first base point located on the first elliptic curve, the first elliptic curve being of a twisted Edwards curve type,
- at least one processor configured for computing data representative of the signature from the data representative of the private key and of the message, by getting a scalar multiplication on the first elliptic curve of the first base point by a nonce value,
- at least one output adapted to provide the data representative of the signature for securing digital communications.

According to the disclosure:

- the input(s) is/are adapted to receive at least one parameter, defining a second elliptic curve birationally equivalent to the first elliptic curve via an isomorphism and a second base point located on the second elliptic curve and corresponding to the first base point with respect to the isomorphism, the second elliptic curve being of a Montgomery curve type,
- the processor(s) is/are configured for proceeding with a scalar multiplication on the second elliptic curve of the second base point by at least one adjusted nonce value among the nonce value and at least one division modulo the field order of the nonce value by respectively at least one adjustment integer greater than 1, that adjustment integer being worth 1 when the adjusted nonce value consists in the nonce value, and for converting a resulting point of the scalar multiplication on the second elliptic curve to the scalar multiplication on the first elliptic curve by at least one isogeny, the latter having a degree equal to respectively the adjustment integer(s) and mapping the second base point to at least one scalar multiplication of the first base point by respectively the adjustment integer(s).

The present device for generating a signature calls for remarks similar to those made above about the device for generating a public key. Again, the scalar multiplication on the first elliptic curve is obtained indirectly, via the scalar multiplication on the second elliptic curve and the conversion to the first elliptic curve. Also, the generation is anchored in a twisted Edwards curve scheme, but relies on scalar multiplications based on a Montgomery curve, via a forth and back process between the twisted Edwards curve and the Montgomery curve.

Likewise, also, the computational performance may thereby be significantly enhanced in some implementations.

Likewise, too, the conversion back from the Montgomery curve to the twisted Edwards curve may be obtained by the inverse mapping of the isomorphism between the twisted Edwards curve and the Montgomery curve, the domain parameters may be known in advance so that operations may start directly on the second elliptic curve, and/or in some implementations, the first elliptic curve and the second elliptic curve are defined over a prime field.

Also, the remarks regarding the adjustment integer developed about the device for generating a public key stand likewise for the device for generating a signature.

In particular embodiments, the device for generating a signature includes a device for generating a public key compliant with the above definition.

Combining the two devices may prove particularly attractive, insofar as their respective performances may be cumulated by first generating a public key (at a transmission or storage side), and by then exploiting it (at a reception or retrieval side) for checking the authenticity of messages by means of generated signatures (at the transmission or storage side) associated with those messages. Such a combination may further be interesting in terms of implementation, through an optional common use of mutualized functionalities such as notably for switching between the two elliptic curve schemes and/or executing scalar multiplications on the Montgomery curve.

Anyway, such a combination of the two devices is optional and any of them may instead stand without the other.

In some implementations, the nonce value is deterministically derived from the private key and the message, and possibly also the order of the base point (in either the first elliptic curve or the second elliptic curve), as notably practiced in EdDSA algorithms.

In alternative implementations, the nonce value is randomly generated, as notably practiced in some ECDSA modes.

In either the device for generating a public key or the device for generating a signature, according to some embodiments, the processor(s) is/are configured for proceeding with the scalar multiplication on the second elliptic curve in an expanded coordinate representation involving at least three coordinates instead of two coordinates as in an affine representation. That expanded coordinate representation is adapted to switch between the affine representation on the first elliptic curve and the expanded coordinate representation on the second elliptic curve, so that the scalar multiplication on the second elliptic curve is effected in the expanded coordinate representation without modular inversion. The processor(s) is/are then further configured for converting the expanded coordinate representation of the resulting point on the second elliptic curve to the affine representation of the scalar multiplication on the first elliptic curve.

Proceeding so may provide the usual benefits of avoiding modular inversion in scalar multiplications, those operations being executed in the second elliptic curve instead of the first elliptic curve as expected. In particular implementations, the performance may then reach a high level.

Retrieving the affine representation of the scalar multiplication on the first elliptic curve from the second elliptic curve may require at least one modular inversion. It can be kept in mind, however, that in traditional processing on the twisted Edwards curve, restituting the affine representation of a scalar product from a projective homogeneous representation already involves usually at least one modular inversion.

In particular implementations relying on the expanded coordinate representation, the latter is a projective coordinate representation, in which a point defined by the three or more coordinates is left unchanged by multiplying those coordinates by a same coefficient, and the processor(s) is/are configured for converting with a single modular inversion the expanded coordinate representation of the resulting point on the second elliptic curve to the affine representation of the scalar multiplication on the first elliptic curve.

The projective coordinate representation, corresponding to homogeneous coordinates, then enables to reconstitute the affine coordinates of the resulting point on the first elliptic curve with no more modular inversion than would be needed if the scalar multiplication were carried out entirely on the first elliptic curve. This may open the way to substantial computational gains.

This particularly attractive feature proves to result from the basic homogeneous properties of the homogeneous coordinates.

The disclosure further pertains to a device for verifying a signature associated with a message from a public key in ECC, the device including:

- at least one input adapted to receive data representative of the signature, of the public key and of the message, and at least one parameter defining a first elliptic curve and a first base point located on the first elliptic curve, the first elliptic curve being of a twisted Edwards curve type, the signature comprising a scalar part associated with a check value and a curve point part representative of a check curve point of the first elliptic curve, and the public key being representative of a public key point of the first elliptic curve,

- at least one processor configured for verifying consistency between the signature and the message by an equality check corresponding to the first elliptic curve, involving terms based respectively on the signature curve point part, on a scalar multiplication of the first base point by a base point multiplier derived from at least the signature scalar part, and on a scalar multiplication of the public key point by a public key multiplier derived from at least the signature curve point part, at least one of the base point multiplier and public key multiplier being also derived from the message,
- at least one output adapted to provide an authentication outcome of the equality check for securing digital communications.

According to the disclosure:

- the input(s) is/are adapted to receive at least one parameter, defining a second elliptic curve birationally equivalent to the first elliptic curve via an isomorphism and a second base point located on the second elliptic curve and corresponding to the first base point with respect to that isomorphism, the second elliptic curve being of a Montgomery curve type,
- the processor(s) is/are configured for determining from the public key a converted public key point of the second elliptic curve corresponding to the public key point of the first elliptic curve with respect to the isomorphism, for proceeding with scalar multiplications on the second elliptic curve of the second base point by the base point multiplier and of the converted public key point by the public key multiplier, and for carrying out the equality check in a same one of the first elliptic curve and second elliptic curve, on the ground of the scalar multiplications and of the check curve point.

The equality check "corresponds" to the first elliptic curve in the sense that its result is the same as if carried out on the first elliptic curve, whether executed effectively on the first elliptic curve or on the second elliptic curve. The related scalar multiplications are as for them carried out on the second elliptic curve, based on the conversion of at least the public key point from the first elliptic curve to the second elliptic curve and on the availability of the second base point in the second elliptic curve.

The matching between on one hand the equality check as executed by the disclosed device, by migrating at least the scalar multiplications from the twisted Edwards curve to the Montgomery curve, and on the other hand an equality check relying entirely on the twisted Edwards curve including for scalar multiplications, is based on the isomorphism between the twisted Edwards curve and the Montgomery curve.

In some implementations, the first elliptic curve and the second elliptic curve are defined over a prime field.

In some embodiments, the parameter(s) defining the first elliptic curve and the first base point comprise(s) a mere flag pointing to the identity of the selected twisted Edwards curve. Likewise, in some embodiments which may be combined with the previous ones, the parameter(s) defining the second elliptic curve and the second base point comprise(s) a mere flag pointing to the identity of the selected Montgomery curve.

In alternative embodiments, at least part of the domain parameters of the exploited Montgomery curve and/or associated twisted Edwards curve need to be constructed, consistently between the two curves. In some implementations of such variants, data regarding the first base point are notably communicated so that the second base point can be determined.

The curve point part of the signature may be a code number subject to exponentiation for constructing the check curve point. Likewise, in some embodiments, the public key is a code number subject to exponentiation for constructing the public key point.

Once the scalar multiplications of the second base point by the base point multiplier and of the converted public key point by the public key multiplier have been executed on the second elliptic curve, the equality check is carried out either on the first elliptic curve or on the second elliptic curve.

More precisely, in a first set of embodiments, the equality check is executed on the twisted Edwards curve by converting back the two product points produced by the scalar multiplications from the Montgomery curve to the twisted Edwards curve. That conversion back may be obtained by the inverse mapping of the isomorphism between the twisted Edwards curve and the Montgomery curve. It is then possible to proceed with the equality check on the twisted Edwards curve as traditionally done, in the same way as if all operations had taken place on this curve. In this respect, the Montgomery curve may appear like a background tool exploited in forth and back operations directed selectively to scalar multiplications, without affecting in any way all other actions executed on the twisted Edwards curve. Such implementation modes may be highly compatible with existing ECC systems, notably those involving EdDSA or ECDSA algorithms.

In a second set of embodiments, the equality check is executed on the Montgomery curve by converting the check curve point from the twisted Edwards curve to the Montgomery curve. This solution is still more surprising than the previous one, insofar as though being seemingly fully based on a twisted Edwards curve, basic operations determining for the signature verification are executed on another curve and can produce the expected outcome. Such implementation modes are particularly relevant to EdDSA schemes.

In either the first or the second set of embodiments above, the device for verifying a signature may, in some implementations, enable to enhance substantially the computational performance, by entrusting the Montgomery curve side with scalar multiplications for which efficiency can be enhanced with respect to same operations executed on the twisted Edwards curve side.

In some implementations, the equality check involves the scalar multiplication of the base point by the check value and the scalar multiplication of the public key point by a scalar value derived from the curve point part, the public key, the message, and optionally the base point order (in either of the first or second elliptic curve). Those are consistent with EdDSA processes.

In alternative implementations, the equality check involves the scalar multiplication of the base point by a number derived from the message, the check value and optionally the base point order, and the scalar multiplication of the public key point by a number derived from the check curve point, the check value and optionally the base point order. Those are consistent with ECDSA processes.

The device for verifying a signature may be combined with the device for generating a public key and/or the device for generating a signature compliant with the disclosure. Such combined implementations may be attractive in terms of synergies and consistency, and same computation modules may possibly be exploited in a mutualized way for the various functionalities, e.g. scalar multiplications on the Montgomery curve and/or conversions between elliptic curves.

However, in alternative implementations, the device for verifying a signature is not combined with the device for generating a public key nor with the device for generating a signature compliant with the disclosure. Developments may then be focused on the signature verification.

A main point of commonality between the ECC device for generating a public key, the device for generating a signature and the device for verifying a signature according to the disclosure consists in the shifting of involved scalar multiplications from the relevant twisted Edwards curve to a corresponding Montgomery curve birationally equivalent to the twisted Edwards curve.

This shifting is based on successive forth and back conversions between the twisted Edwards curve and the Montgomery curve, in which one direction of those conversions may be implicit and not require dedicated computations. In particular, in the device for generating a public key and the device for generating a signature, the conversion from the twisted Edwards curve to the Montgomery curve may be implicit, insofar as the base point of the considered Montgomery curve is already available. Also, in the device for verifying a signature, the conversion back from the Montgomery curve to the twisted Edwards curve may be implicit, insofar as the equality check is performed on the Montgomery curve while being equivalent to the equality check on the twisted Edwards curve (i.e. has the same outcome).

In some embodiments of the device for verifying a signature, the processor(s) is/are configured for determining in the second elliptic curve the converted public key point and a converted check curve point corresponding to the check curve point of the first elliptic curve with respect to the isomorphism, in an expanded coordinate representation on the second elliptic curve involving at least three coordinates, the expanded coordinate representation being adapted to switch between an affine representation involving two coordinates on the first elliptic curve and the expanded coordinate representation on the second elliptic curve, and for proceeding without modular inversion with the scalar multiplications as well as the equality check in the expanded coordinate representation on the second elliptic curve.

In those embodiments, belonging to those in which the equality check is carried out on the Montgomery curve, a high degree of efficiency may be possibly ensured by using the expanded coordinates for both scalar multiplications and equality check. Modular inversions can then be fully avoided in those operations, as could be traditionally obtained by an expanded coordinate representation while remaining on the twisted Edwards curve, but with significantly increased performance in scalar multiplications in some embodiments.

The remarkable ability to proceed without modular inversion with the equality check using the expanded coordinates on the Montgomery curve proves to be due on one hand to the isomorphism between the twisted Edwards curve and the Montgomery curve, enabling to express the concerned equality in a similar way on both curves, and on the other hand to properties of the expanded coordinate representation enabling to transform without modular inversion the affine coordinates to the expanded coordinates on the Montgomery curve.

In some implementations, the processor(s) is/are configured for converting without modular inversion the affine representation in the first elliptic curve of the public key point to a projective homogeneous coordinate representation in the second elliptic curve involving at least three coordinates, the projective homogeneous coordinate representation being such that a point defined by those three or more coordinates is left unchanged by multiplying those coordinates by a same coefficient.

Using the projective homogeneous coordinates enables such conversions without modular inversion due to its homogeneous properties, and may thereby offer further increased performance.

Those implementations may be combined with the previous ones involving the expanded coordinate representation, the latter then consisting in the projective homogeneous representation.

In the set of embodiments in which the equality check is carried out on the Montgomery curve, according to advantageous modes, not only the public key point but also the check curve point are converted without modular inversion from the twisted Edwards curve in affine coordinates to the Montgomery curve in projective homogeneous coordinates. In this way, the converted check curve point is available for entirely executing the equality check on the Montgomery curve in projective homogeneous coordinates, possibly again without modular inversion.

According to more specific embodiments involving projective homogeneous representations in the Montgomery curve, the processor(s) is/are configured for proceeding with the scalar multiplications on the second elliptic curve by a Montgomery ladder approach modified by processing coordinates entirely expressed in the projective homogeneous coordinate representation.

This approach strongly contrasts with the usual and expected exploitation of the Montgomery ladder, in which affine coordinates are input for the processing. It can be obtained by multiplying the terms of the algorithm by the square of the third homogeneous coordinate, $Z^2$.

An advantageous potential property of those specific embodiments is to enable to enter a third homogeneous value Z distinct from 1 for the scalar multiplication. In addition, working entirely with the homogeneous coordinates, instead of entering the affine coordinates in the computations as traditionally done, makes possible the absence of modular inversion in carrying out the Montgomery ladder.

In particular modes of the device for verifying a signature, the processor(s) is/are configured for effecting on the first elliptic curve via the second elliptic curve an EdDSA procedure. The base point multiplier then corresponds to the check value and the public key multiplier is derived from the curve point part, the public key and the message.

In this respect, the disclosed device may strongly rely on the existing EdDSA methods, whether the equality check is executed on the Montgomery curve, for sake of potential increased efficiency, or on the twisted Edwards curve (further to a conversion of the obtained double-base scalar multiplication point from the Montgomery curve), for sake of enhanced integration compatibility.

In some modes of the device for generating a public key, the device for generating a signature and/or the device for verifying a signature, the first elliptic curve and the second elliptic curve are respectively birationally equivalent elliptic curves Ed25519 and Curve25519 over the prime field defined by the prime number $2^{255} - 19$, the first elliptic curve Ed25519 being defined in affine coordinates x, y by:

$$-x^2 + y^2 = 1 - (121665/121666)\, x^2\, y^2 \qquad (2)$$

and being associated with the first base point having an ordinate y equal to 4/5, and the second elliptic curve Curve25519 being defined in affine coordinates u, v by:

$$v^2 = u^3 + 486662\, u^2 + u \qquad (3)$$

and being associated with said second base point having an abscissa u equal to 9.

Those elliptic curves may prove particularly suited to the devices of the disclosure, and refer to already established domain parameters, thereby simplifying computations by avoiding notably the determination of the proper base points.

Each of Curve25519 and Ed25519 has a cofactor equal to 8 (i.e. the number of elements in the cyclic subgroup generated by the base point is 1/8 that of the prime field).

In alternative implementations, the device for generating a public key, the device for generating a signature and the device for verifying a signature are instead or also suited to the first elliptic curve and the second elliptic curve being respectively birationally equivalent elliptic curves Ed448 and Curve448 over the Solinas trinomial prime number.

Another object of the disclosure is a method for generating a public key from a private key in ECC, that method including:

- receiving data representative of the private key, and at least one parameter defining a first elliptic curve on a finite field having a field order and a first base point located on the first elliptic curve, that first elliptic curve being of a twisted Edwards curve type,
- computing with at least one processor, data representative of the public key from the data representative of the private key, by getting a scalar multiplication on the first elliptic curve of the first base point by a number derived from the private key,
- providing the data representative of the public key for securing digital communications.

According to the disclosure, the method includes:

- receiving at least one parameter, defining a second elliptic curve birationally equivalent to the first elliptic curve via an isomorphism and a second base point located on the second elliptic curve and corresponding to the first base point with respect to the isomorphism, the second elliptic curve being of a Montgomery curve type,
- with the processor(s), proceeding with a scalar multiplication on the second elliptic curve of the second base point by an adjusted scalar among the scalar derived from the private key and a division modulo the field order of that scalar by an adjustment integer greater than 1, the adjustment integer being worth 1 when the adjusted scalar consists in the scalar, and converting a resulting point of the scalar multiplication on the second elliptic curve to the scalar multiplication on the first elliptic curve by an isogeny, that isogeny having a degree equal to the adjustment integer and mapping the second base point to a scalar multiplication of the first base point by the adjustment integer.

The method for generating a public key is advantageously executed by a device for generating a public key according to any of the embodiments of the disclosure.

A further object of the disclosure is a method for generating a signature associated with a message from a private key in ECC, that method including:

- receiving data representative of the private key and of the message, and at least one parameter, defining a first elliptic curve on a finite field having a field order and a first base point located on the first elliptic curve, the first elliptic curve being of a twisted Edwards curve type,
- computing with at least one processor, data representative of the signature from the data representative of the private key and of the message, by getting a scalar multiplication on the first elliptic curve of the first base point by a nonce value,
- providing the data representative of the signature for securing digital communications.

According to the disclosure, the method includes:

- receiving at least one parameter, defining a second elliptic curve birationally equivalent to the first elliptic curve via an isomorphism and a second base point located on the second elliptic curve and corresponding to the first base point with respect to that isomorphism, the second elliptic curve being of a Montgomery curve type,
- with the processor(s), proceeding with a scalar multiplication on the second elliptic curve of the second base point by an adjusted nonce value among the nonce value and a division modulo the field order of the nonce value by an adjustment integer greater than 1, that adjustment integer being worth 1 when the adjusted nonce value consists in the nonce value, and converting a resulting point of the scalar multiplication on the second elliptic curve to the scalar multiplication on the first elliptic curve by an isogeny, that isogeny having a degree equal to the adjustment integer and mapping the second base point to a scalar multiplication of the first base point by the adjustment integer.

The method for generating a signature is advantageously executed by a device for generating a signature according to any of the embodiments of the disclosure.

A still further object of the disclosure is a method for verifying a signature associated with a message from a public key in ECC, that method including:

- receiving data representative of the signature, of the public key and of the message, and at least one parameter defining a first elliptic curve and a first base point located on the first elliptic curve, the first elliptic curve being of a twisted Edwards curve type, the signature comprising a scalar part associated with a check value and a curve point part representative of a check curve point of the first elliptic curve, and the public key being representative of a public key point of the first elliptic curve,
- verifying with at least one processor, consistency between the signature and the message by an equality check corresponding to the first elliptic curve, involving terms based respectively on the signature curve point part, on a scalar multiplication of the first base point by a base point multiplier derived from at least the signature scalar part, and on a scalar multiplication of the public key point by a public key multiplier derived from at least the signature curve point part, at least one of the base point multiplier and public key multiplier being also derived from the message,
- providing an authentication outcome of the equality check for securing digital communications.

According to the disclosure, the method includes:

- receiving at least one parameter, defining a second elliptic curve birationally equivalent to the first elliptic curve via an isomorphism and a second base point located on the second elliptic curve and corresponding to the first base point with respect to that isomorphism, the second elliptic curve being of a Montgomery curve type,

- with the processor(s), determining from the public key a converted public key point of the second elliptic curve corresponding to the public key point of the first elliptic curve with respect to the isomorphism, proceeding with scalar multiplications on the second elliptic curve of the second base point by the base point multiplier and of the converted public key point by the public key multiplier, and for carrying out the equality check in a same one of the first elliptic curve and second elliptic curve, on the ground of the scalar multiplications and of the check curve point.

The method for verifying a signature is advantageously executed by a device for verifying a signature according to any of the embodiments of the disclosure.

In addition, the disclosure relates to a computer program comprising software code adapted to perform a method for generating a public key, a method for generating a signature and/or a method for verifying a signature according to the disclosure when that software code is executed by a processor.

The present disclosure further pertains to a non-transitory program storage device, readable by a computer, tangibly embodying a program of instructions executable by the computer to perform a method for generating a public key, a method for generating a signature and/or a method for verifying a signature, compliant with the present disclosure.

Such a non-transitory program storage device can be, without limitation, an electronic, magnetic, optical, electromagnetic, infrared, or semiconductor device, or any suitable combination of the foregoing. It is to be appreciated that the following, while providing more specific examples, is merely an illustrative and not exhaustive listing as readily appreciated by one of ordinary skill in the art: a portable computer diskette, a hard disk, a ROM, an EPROM (Erasable Programmable ROM), a Flash memory, a portable CD-ROM (Compact-Disc ROM).

## LIST OF FIGURES

The present disclosure will be better understood, and other specific features and advantages will emerge upon reading the following description of particular and non-restrictive illustrative embodiments, the description making reference to the annexed drawings wherein:

**Figure 1** illustrates the cross-communication of public keys between two respective communicating entities;

**Figure 2** illustrates the transmission of signed messages between the two communicating entities of figure 1 once being each provided with the other entity's public key;

**Figure 3A** is a block diagram schematically representing a device for generating a public key compliant with the present disclosure, exploited by at least one of the communicating entities of figures 1 and 2;

**Figure 3B** is a block diagram schematically representing a sub-device of the device for generating a public key of figure 3A, including scalar multiplication functionalities;

**Figure 4A** is a block diagram schematically representing a device for generating a signature compliant with the present disclosure, exploited by at least one of the communicating entities of figures 1 and 2;

**Figure 4B** is a block diagram schematically representing a sub-device of the device for generating a signature of figure 4A, including scalar multiplication functionalities;

**Figure 5** is a block diagram of a device dedicated to scalar multiplication functionalities, exploited in some implementations of the device for generating a public key of figure 3A, of the device for generating a signature of figure 4A, or of a device combining the functionalities of the devices of figure 3A and figure 3B;

**Figure 6** is a block diagram schematically representing a device for generating a public key and for generating a signature associated the generated public key, compliant with the present disclosure and including the device dedicated to scalar multiplication functionalities of figure 5;

**Figure 7A** is a block diagram schematically representing a device for verifying a signature compliant with the present disclosure, exploited by at least one of the communicating entities of figures 1 and 2;

**Figure 7B** is a block diagram schematically representing a sub-device of the device for verifying a signature of figure 7A, including double-base scalar multiplications and equality check functionalities;

**Figure 8A** is a block diagram schematically representing a variant device for verifying a signature compliant with the present disclosure, exploited by at least one of the communicating entities of figures 1 and 2;

**Figure 8B** is a block diagram schematically representing a sub-device of the device for verifying a signature of figure 8A, including double-base scalar multiplications;

**Figure 9** is a flow chart showing successive steps executed with the device for generating a public key represented on figure 3A;

**Figure 10** is a flow chart showing successive steps executed with the device for generating a public key and for generating a signature represented on figure 6;

**Figure 11** is a flow chart showing successive steps executed with the device for verifying a public key represented on figure 8A;

**Figure 12** diagrammatically shows an apparatus integrating the functions of the devices of figure 3A, 3B, 4A, 4B, 5, 6, 7A, 7B, 8A and 8B or of part of them.

On the figures, the drawings are not to scale, and identical or similar elements are designated by the same references.

## ILLUSTRATIVE EMBODIMENTS

The present description illustrates the principles of the present disclosure. It will thus be appreciated that those skilled in the art will be able to devise various arrangements that, although not explicitly described or shown herein, embody the principles of the disclosure and are included within its spirit and scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein may represent conceptual views of illustrative circuitry embodying the principles of the disclosure. Similarly, it will be appreciated that any flow charts, flow diagrams, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, a single shared processor, or a plurality of individual processors, some of which may be shared.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces.

### *Authentication operations*

The present disclosure regards secured communications between entities, enabling authentication of transmitted messages. Such entities may include persons, as well as organizations or objects. Also, the communications may take place through one or more wired (e.g. Ethernet), wireless (e.g. WiFi, WiMax - standing for Worldwide interoperability for Microwave Access, or Bluetooth) and/or cellular telecommunication (e.g. UMTS - standing for Universal Mobile Telecommunications System, LTE - standing for Long-Term Evolution, or 5G) networks, or via message storage and retrieval. Digital communications as defined above are concerned, and authentication exploits message signatures enabling to check their authenticity.

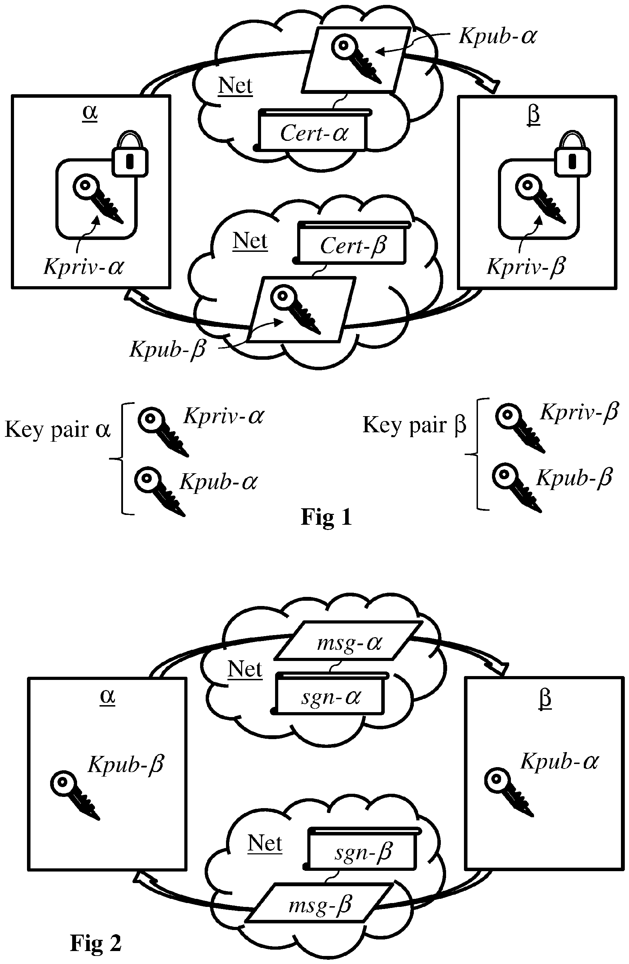

For sake of illustration, as shown on **Figure 1,** a first entity $\alpha$ provided with a private key *Kpriv-$\alpha$* previously generated in a random way and maintained confidential and inaccessible beyond entity $\alpha$, is making a public key *Kpub-*

$\alpha$ associated with the private key $Kpriv\text{-}\alpha$ so as to form a key pair, available to a second entity $\beta$. For example, the public key $Kpub\text{-}\alpha$ is transmitted to entity $\beta$ via a network or a set of two or more networks Net. For sake of safety, the public key $Kpub\text{-}\alpha$ may be provided with a digital certificate $Cert\text{-}\alpha$, i.e. a digital document proving the authenticity of the public key $Kpub\text{-}\alpha$ and typically including information about that key, the identity on the subject (i.e. the key owner), and the digital signature of an issuer (i.e. an organization having verified the certificate's content).

Instead of being communicated by entity $\alpha$, the public key $Kpub\text{-}\alpha$ may e.g. be transmitted to the entity $\beta$ by a centralized system collecting and distributing public keys. Also, the public key $Kpub\text{-}\alpha$ may be distributed in a secured way, so that it be available only to a selected group of entities and not easily accessible to others. In addition, instead of being made available to the entity $\beta$ via network telecommunication, the public key $Kpub\text{-}\alpha$ may be recorded on a support and retrieved later on by entity $\beta$ through extracting it from that support.

Likewise, the entity $\alpha$ is obtaining a public key $Kpub\text{-}\beta$ from entity $\beta$ and being part of a key pair proper to entity $\beta$, that key pair comprising the public key $Kpub\text{-}\beta$ and a secured private key $Kpriv\text{-}\beta$ accessible only to entity $\beta$. The transmission of public key $Kpub\text{-}\beta$ may e.g. be done with a digital certificate $Cert\text{-}\beta$ via the same network(s) Net as for the transmission of public key $Kpub\text{-}\alpha$ to entity $\beta$, or via other communication media. Accordingly, messages can be authenticated between entities $\alpha$ and $\beta$ in both directions.

Once equipped with each other's public key $Kpub\text{-}\alpha$ and $Kpub\text{-}\beta$, entities $\alpha$ and $\beta$ are ready to authenticate messages $msg\text{-}\beta$ and $msg\text{-}\alpha$ respectively received with associated signature $sgn\text{-}\beta$ and $sgn\text{-}\alpha$ from entities $\beta$ and $\alpha$, as illustrated on **Figure 2.** The messages $msg\text{-}\alpha$ and $msg\text{-}\beta$ may be communicated via the same network(s) Net or recording media as used for signature transmissions, or via other ways. Also, received public key $Kpub\text{-}\alpha$ or $Kpub\text{-}\beta$ may be kept and exploited for multiple later received messages $msg\text{-}\alpha$ and $msg\text{-}\beta$, until a new key pair is generated, leading to the communication of an updated public key used for subsequent message transmissions.

The entities $\alpha$ and $\beta$ are fitted with dedicated devices for authentication operations, including public key generation and signature generation at the message sender side, and signature verification at the message recipient side. Those devices are based on elliptic curve cryptography (ECC), and more particularly on twisted Edwards curves. The specific choice of those curves has an impact on the composition of the public keys derived from the private keys, and of the signatures adapted to be verified by means of those public keys. The authentication processes may notably be compliant with EdDSA schemes. In alternative modes, they are compliant with ECDSA.

Those three authentication aspects, namely public key generation (hence keypair generation), signature generation and signature verification, will be developed below in relation with devices that may be exploited with one of both of the entities $\alpha$ and $\beta$. It is noted at the outset that the implementation of any of them does not make necessary the implementation of the others, and leaves full latitude in this respect. In particular, the entity $\alpha$ may be provided with one or more of those disclosed devices without any such implementation within the entity $\beta$, and conversely. Also, any of the device for public key generation, the device for signature generation and the device for signature verification may be implemented without the others, and likewise for any combination of two of them without the third one. In addition, those devices offer full compatibility with ECC authentication processes based on twisted Edwards curves, whether traditional, already disclosed or to be developed in the future.

Commonality features between those devices rely on the exploitation of a Montgomery curve for each selected twisted Edwards curve, those two curves being birationally equivalent, so that an isomorphism may be defined between those curves. More precisely, while the twisted Edwards curve has domain parameters $Para_{Ed}$ including notably a base point $G_{Ed}$, the Montgomery curve has domain parameters $Para_M$ including notably a base point $G_M$, and the above isomorphism interlinks the base point $G_{Ed}$ to the base point $G_M$. In each of those devices, part or all of the scalar multiplication operations on the twisted Edwards curve are displaced on the birationally equivalent Montgomery curve, subject to any proper cross-conversions between the two elliptic curves.

Each of the devices for public key generation, signature generation and signature verification is advantageously an apparatus, or a physical part of an apparatus, designed, configured and/or adapted for performing the mentioned functions and produce the mentioned effects or results. In alternative implementations, any of those devices is embodied as a set of apparatus or physical parts of apparatus, whether grouped in a same machine or in different, possibly remote, machines. Those devices may e.g. have functions distributed over a cloud infrastructure and be available to users as a cloud-based service, or have remote functions accessible through an API.

The devices for public key generation, signature generation and signature verification may be integrated in a same apparatus or set of apparatus corresponding to a digital authentication system associated e.g. to the entity $\alpha$ or $\beta$. In other implementations, the structure of any of those three devices may be completely independent of the structure of one or both of the two other devices.

Those devices may have applications in various fields, including e.g. IoT (Internet of Things) and blockchains.

The disclosure regards asymmetric cryptography, involving the use of key pairs. It is however also relevant to symmetric cryptography, insofar as ECC scalar multiplications are involved in authentication operations - such as in generating a symmetric key or in verifying a message with that key.

The devices will now be detailed. In what follows, the modules are to be understood as functional entities rather than material, physically distinct, components. They can consequently be embodied either as grouped together in a same tangible and concrete component, or distributed into several such components. Also, each of those modules is possibly itself shared between at least two physical components. In addition, the modules are implemented in hardware, software, firmware, or any mixed form thereof as well. They are preferably embodied within at least one processor of the devices.

### *Device for public key generation*

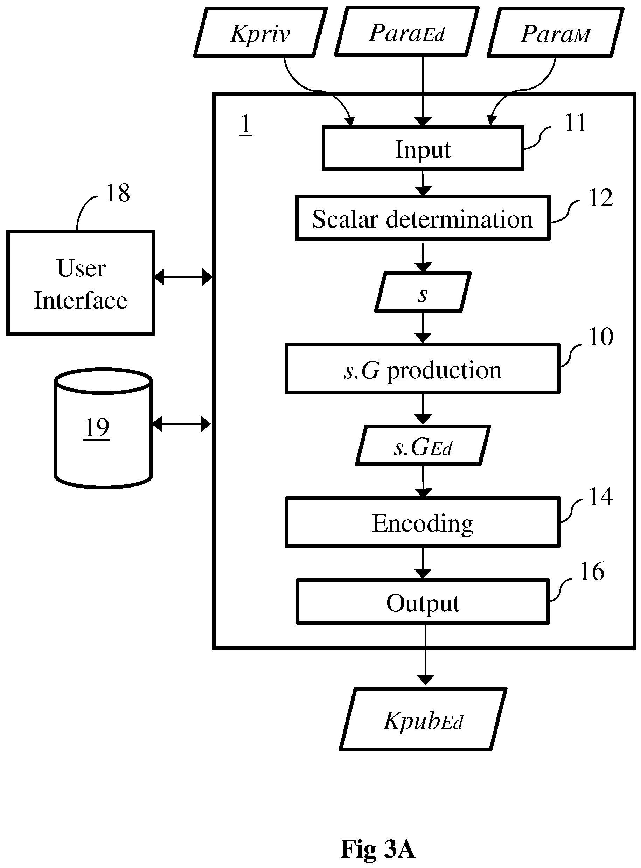

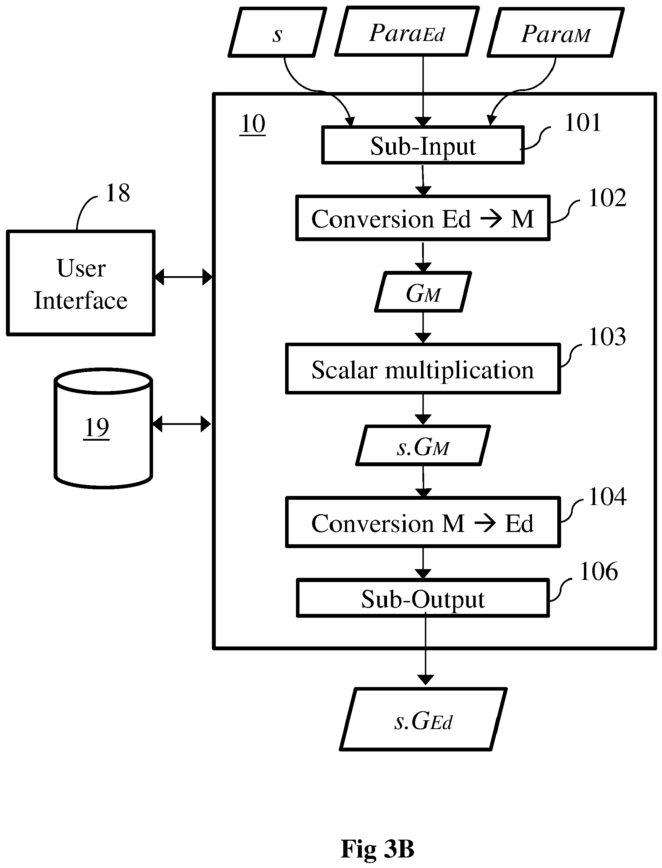

A device 1 for public key generation, as illustrated on **Figures 3A and 3B,** is interacting with a user interface 18, via which information can be entered and retrieved by a user. The user interface 18 includes any means appropriate for entering or retrieving data, information or instructions, notably visual, tactile and/or audio capacities that can encompass any or several of the following means as well known by a person skilled in the art: a screen, a keyboard, a trackball, a touchpad, a touchscreen, a loudspeaker, a voice recognition system.

The device 1 is further connected to one or more local or remote database(s) 19, from which information can be retrieved or received and into which information can be recorded. The database(s) 19 can take the form of storage resources available from any kind of appropriate storage means, which can be notably a RAM or an EEPROM (Electrically-Erasable Programmable Read-Only Memory) such as a Flash memory, possibly within an SSD (Solid-State Disk). In variant implementations, relevant information may be transmitted to the device 1 via a telecommunication network such as notably network(s) Net, e.g. streamed to the device 1.

The device 1 is adapted to receive as inputs a private key *Kpriv* and domain parameters pertaining to a twisted Edwards curve, *Para$_{Ed}$*, including notably a base point $G_{Ed}$. The private key *Kpriv* is typically stored locally and protected from intrusions. The device 1 is further adapted to receive domain parameters pertaining to a birationally equivalent Montgomery curve, *Para$_M$*, including notably a base point $G_M$, so that an isomorphism defined between the twisted Edwards curve and the Montgomery curve interlinks the base points $G_{Ed}$ and $G_M$.

The device 1 may be adapted to receive from user interface 18, data indicating a user-selected twisted Edwards curve to be exploited in authentication, a default selection being provided for, such as e.g. Ed15519. In other modes, which are advantageously combined with the previous one, the device 1 is adapted to receive such data giving the twisted Edwards curve from a central system or from another entity, for sake of compatibility and/or consistency. The device 1 may then be configured for retrieving the domain parameters *Para$_{Ed}$* corresponding to the considered twisted Edwards curve from the database(s) 19.

The device 1 may be adapted to determine the identity of the Montgomery curve birationally equivalent to the twisted Edwards curve from e.g. a correspondence table, and to retrieve the domain parameters *Para$_M$* corresponding to that Montgomery curve from the database(s) 19. In other modes, which are advantageously combined with the previous one, the device 1 is configured for directly computing the domain parameters *Para$_M$* from the information pertaining to the considered twisted Edwards curve.

A twisted Edwards curve is defined in a general way, over a field K having a characteristic distinct from 2, by the following equation involving affine coordinates (x, y) and non-zero parameters a and d in K:

$$a\,x^2 + y^2 = 1 + d\,x^2\,y^2 \qquad (4)$$

where $a \neq d$, and case $a = 1$ is known is the untwisted Edwards field.

A Montgomery curve is defined in a general way, over a field K having a characteristic distinct from 2, by the following equation involving affine coordinates (u, v) and non-zero parameters *A* and *B* in K:

$$B\,v^2 = u^3 + A\,u^2 + u \qquad (5)$$

where $A \neq \pm\,2$, $B \neq 0$ and $B\,(A^2 - 4) \neq 0$

A birational equivalence between a twisted Edwards curve having parameters *a*, *d* and a Montgomery curve having parameters *A, B* is then given by:

$$A = 2\,(a + d)\,/\,(a - d), \qquad B = 4\,/\,(a - d) \qquad (6)$$

$$a = (A + 2)\,/\,B, \qquad d = (A - 2)\,/\,B \qquad (7)$$

The respective affine coordinates (x, y) and (u,v) of the twisted Edwards curve and of the Montgomery curve are then linked with the following mapping equations, with number c being defined as:

$$c = \sqrt{-(A+2)/B} \qquad (8)$$

in which, where the field K is a quotient structure, c may be defined as a quadratic residue of the term in the square root:

$$(u, v) = \left(\frac{1+y}{1-y}, c\frac{1+y}{(1-y)x}\right) \qquad (9)$$

$$(x, y) = \left(c\frac{u}{v}, \frac{u-1}{u+1}\right) \qquad (10)$$

excluding points such as x = 0 or y = 1, as well as u = -1 or v = 0.

In advantageous embodiments, the twisted Edwards curve is of the Ed25519 type as defined above in relation with equation (2). The associated parameters are then (using the hexadecimal notation):

- prime field $p = 2^{255} - 19$
- order ($n$) = 0x1000000000000000000000000000000014DEF9DEA2F79CD65812 631A5CF5D3ED
- cofactor ($h$) = 0x08
- parameter a = -1 mod $p$ = 0x7FFFFFFFFFFFFFFFFFFFFFFFFFFFFFFFFFFFFFFFFFFFFFFFFFFFFF FFFFFFFFFFFF-FEC
- parameter $d$ = 0x52036CEE2B6FFE738CC740797779E89800700A4D4141D8AB75E B4DCA135978A3
- base point $G_{Ed}$ in affine coordinates (x, y) =

    ◦ 0x216936D3CD6E53FEC0A4E231FDD6DC5C692CC7609525 A7B2C9562D608F25D51A
    ◦ 0x6666666666666666666666666666666666666666666666666666 666666666658

A Montgomery curve corresponding to the Ed25519 curve above is Curve25519, as previously expressed with equation (3). The associated parameters are then (using the hexadecimal notation):

- prime field $p = 2^{255} - 19$
- order ($n$) = 0x1000000000000000000000000000000014DEF9DEA2F79CD65812 631A5CF5D3ED
- cofactor ($h$) = 0x08
- parameter $A$ = 0x76D06
- parameter $B$ = 0x01
- base point $G_M$ in affine coordinates (u, v) =

    ◦ 0x09
    ◦ 0x20AE19A1B8A086B4E01EDD2C7748D14C923D4D7E6D7C 61B229E9C5A27ECED3D9

The device 1 is suited to output a public key $Kpub_{Ed}$ forming a key pair with the private key $Kpriv$ and derivable from it by a usual ECC process based on the twisted Edwards curve determined by the domain parameters $Para_{Ed}$, as known to a skilled person. However, as developed below, the determination of that public key $Kpub_{Ed}$ passes through computations executed on the Montgomery curve determined by the domain parameters $Para_M$. The produced public key $Kpub_{Ed}$ is e.g. recorded in the database(s) 19 for later use and/or made directly available to other entities via the network Net.

The device 1 for public key generation includes an input module 11 suited to receiving the private key $Kpriv$ and the domain parameters $Para_{Ed}$ and $Para_M$, and an output module 16 suited to providing the public key $Kpub_{Ed}$.

The device 1 also includes a module 12 for scalar determination, configured for computing from the private key $Kpriv$ an integer scalar s dedicated to ECC point multiplication by base point $G_{Ed}$. The scalar s may be obtained by applying to the base point $G_{Ed}$ a cryptographic hash function, which may notably belong to the family known as Secure Hash Algorithms or SHA, and published by the NIST (US National Institute of Standards and Technologies) as a FIPS standard (for "Federal Information Processing Standard"). The scalar s may further be obtained by selecting part of the bits of the hash value derived from the base point $G_{Ed}$, such as half of the bits representing the most significant bytes, or MSB.

A module or sub-device 10 downstream of the scalar determination module 12, more developed below, is provided for producing the scalar multiplication $s.G_{Ed}$.

The device 1 further includes a module 14 for encoding the elliptic curve point resulting from the scalar multiplication $s.G_{Ed}$ to an encoded number forming the public key $Kpub_{Ed}$. This may be done notably by keeping the whole y-coordinate of $s.G_{Ed}$ and adding one bit giving the sign of the x-coordinate of $s.G_{Ed}$.

For example, the twisted Edwards curve being Ed25519:

- the private key *Kpriv* has 32 random bytes,
- the module 12 for scalar determination is configured for computed a hash value *h* from the private key *Kpriv* with SHA-512 belonging to the set SHA-2 of SHA (internal state size and output size: 64 bytes, block size: 1024 bits),
- the module 12 for scalar determination is further configured for deriving the scalar s from the hash value *h* as the 32 most significant bytes (i.e. 256 bits) - noted as $s = h.32\text{MSB}$,
- the encoding module 14 is configured for computing the public key $Kpub_{Ed}$ as a 256-bits number on the ground of the point resulting from the scalar multiplication $s.G_{Ed}$ and having affine coordinates (x, y), by selecting as the bit numbered 255 (noted "b255") the sign bit of the x-coordinate, and as the respective bits numbered 254 to 0 (noted "b254...0") the y-coordinate.

In variant implementations, e.g. using ECDSA instead of EdDSA, the encoding module 14 may be absent or inactivated, since the public key may be directly communicated in the form of a curve point giving $s.G_{Ed}$.

The sub-device 10 for producing the scalar multiplication $s.G_{Ed}$, as illustrated on **Figure 3B,** is configured for receiving in a sub-input module 101, data on the domain parameters $Para_{Ed}$ and $Para_M$, and the scalar s, for optionally converting the base point $G_{Ed}$ to the base point $G_M$ by a module 102, carrying out by a scalar multiplication module 103 the scalar multiplication $s.G_M$, for inducing by a conversion module 104 the scalar multiplication $s.G_{Ed}$ through a conversion of the elliptic curve point $s.G_M$ on the Montgomery curve to the elliptic curve point $s.G_{Ed}$ on the twisted Edwards curve, and for providing the result of that multiplication by an sub-output module 106.

In some implementations, the domain parameters $Para_M$ of the Montgomery curve already include the base point $G_M$, which is available e.g. from the database(s) 19. The module 102 is then absent or inactivated.

In variant implementations, the sub-device 10 is configured for itself computing domain parameters of a Montgomery curve birationally equivalent to a concerned twisted Edwards curve, including the base point $G_M$. Those parameters may then be stored into the database(s) 19 and retrieved later on whenever useful in relation with that twisted Edwards curve.

The sub-device 10 may itself have an autonomous structural form, e.g. as an IC (Integrated Circuit) component.

In advantageous implementations, the scalar multiplication module 103 is configured for exploiting projective homogeneous coordinates (U:V:Z) associated with the affine coordinates (u, v), starting from the input affine coordinates $(u_M, v_M)$ of the base point $G_M$, with:

$$U_M = u_M.Z_M, \quad V_M = v_M.Z_M, \quad Z_M = 1 \tag{11}$$

This may be done by applying a Montgomery ladder to U and Z, thereby obtaining a resulting pair (U, Z) for the desired scalar multiplication $s.G_M$, and by recovering the second homogeneous coordinate V associated with that point from the pair (U, Z) as e.g. developed in the above-cited reference to K. Okeya and K. Sakurai.

In advantageous implementations, the conversion module 104 is configured for converting the projective homogeneous coordinates (U:V:Z) of the resulting point expressed on the Montgomery curve to the affine coordinates (x,y) of the same expressed on the twisted Edwards curve, amounting to $s.G_{Ed}$.

For example, the computation is made as follows, by hinging on the projective homogeneous coordinates (X:Y:Z') of the point $s.G_{Ed}$:

- Montgomery projective (U:V:Z) to Edwards projective (X:Y:Z')

$$\left. \begin{array}{l} X = c.U(U + Z) \\ Y = V(U - Z) \\ Z' = V(U + Z) \end{array} \right\} \tag{12}$$

- Edwards projective (X:Y:Z') to Edwards affine (x, y)

$$\left. \begin{array}{l} x = X \,/\, Z' \\ y = Y \,/\, Z' \end{array} \right\} \tag{13}$$

The relevance of equations (13) proves to be due to the following correspondence with the birational equivalence relationship expressed in equation (10):

$$\left. \begin{array}{l} x = \dfrac{X}{Z'} = \dfrac{c.U\,(U+Z)}{V\,(U+Z)} = \dfrac{c.U}{V} = \dfrac{c.u.Z}{v.Z} = \dfrac{c.u}{v} \\[2mm] y = \dfrac{Y}{Z'} = \dfrac{V\,(U-Z)}{V\,(U+Z)} = \dfrac{U-Z}{U+Z} = \dfrac{u.Z-Z}{u.Z+Z} = \dfrac{u-1}{u+1} \end{array} \right\}$$

Accordingly, the required data on the domain parameters $Para_{Ed}$ and $Para_M$ may then be reduced, in such proper implementations, to the base point $G_M$ and the conversion coefficient c.

Remarkably, the whole conversion operations require no more than one modular inversion (Z'), further to 6 multiplications.

The reader will appreciate the significant performance enhancement potentially offered by the sub-device 10 where compared with carrying out the scalar multiplication $s.G_{Ed}$ entirely on the twisted Edwards curve by means of a Montgomery ladder. The latter is based on the projective homogeneous coordinates (X:Y:Z) of base point $G_{Ed}$, with X = x.Z, Y = y.Z and Z = 1, and uses X, Y and Z in the ladder. It further involves a transformation back to affine coordinates (x, y) once the result of the scalar multiplication is obtained in projective homogeneous coordinates (x = X/Z, y = Y/Z), thereby requiring one modular inversion (Z). It may further be kept in mind that the Montgomery ladder can be substantially faster on a Montgomery curve than on a twisted Edwards curve.

For sake of illustration, the scalar multiplication $s.G_{Ed}$ executed entirely on the twisted Edwards curve Ed25519 (hereinafter "Ed25519 ladder" for brevity) typically requires 5357 multiplications and 1 inversion, taking into account that each bit requires 21 modular multiplications in the ladder, 255 bits are processed and 2 multiplications and 1 modular inversion are needed for transforming the projective coordinates to the affine coordinates. By contrast, the scalar multiplication $s.G_{Ed}$ executed via the Montgomery curve Curve25519 (hereinafter "Curve25519 ladder" for brevity) typically requires 2829 multiplications and 1 inversion, taking into account that each bit requires 11 modular multiplications in the ladder, 255 bits are processed, 18 multiplications (more precisely 16 multiplications and 2 squares) are required for recovering the V coordinate, 6 multiplications and 1 modular inversion are needed for transforming the projective coordinates in the Montgomery curve to the affine coordinates in the twisted Edwards curve. The gain in performance thus reaches about 47 %.

In alternative embodiments, the twisted Edwards curve and the Montgomery curve being defined over a field of order $p$, the base point $G_M$ of the Montgomery curve is mapped to an $L$-multiple of the base point $G_{Ed}$ of the twisted Edwards curve by a degree-L isogeny, with L being an integer being worth 2 or more. The adjustment integer L is e.g. retrieved from the database 19, user-entered via the user interface 18 or received via the network Net.

The module 12 is then configured for replacing the scalar s with $s/L$ mod $p$, so that the submodule 103 of the module 10 multiplies it by the base point $G_M$. In addition, the submodule 104 is then configured for converting the resulting point from the Montgomery curve to the twisted Edwards curve, by using the L-isogenous mapping instead of an isomorphism as above.

The solutions developed above with the reverse mapping of the isomorphism correspond to a value 1 of the integer L.

The device 1 may be provided with the conversion functionalities associated with a single value of the integer L. In variants, it is provided with the conversion functionalities associated with at least two values, one of them being possibly $L$ = 1. The device 1 may then be configured for selecting the integer L among the possible values, based e.g. on a user-entered command, or on data received via the network Net.

### *Device for signature generation*

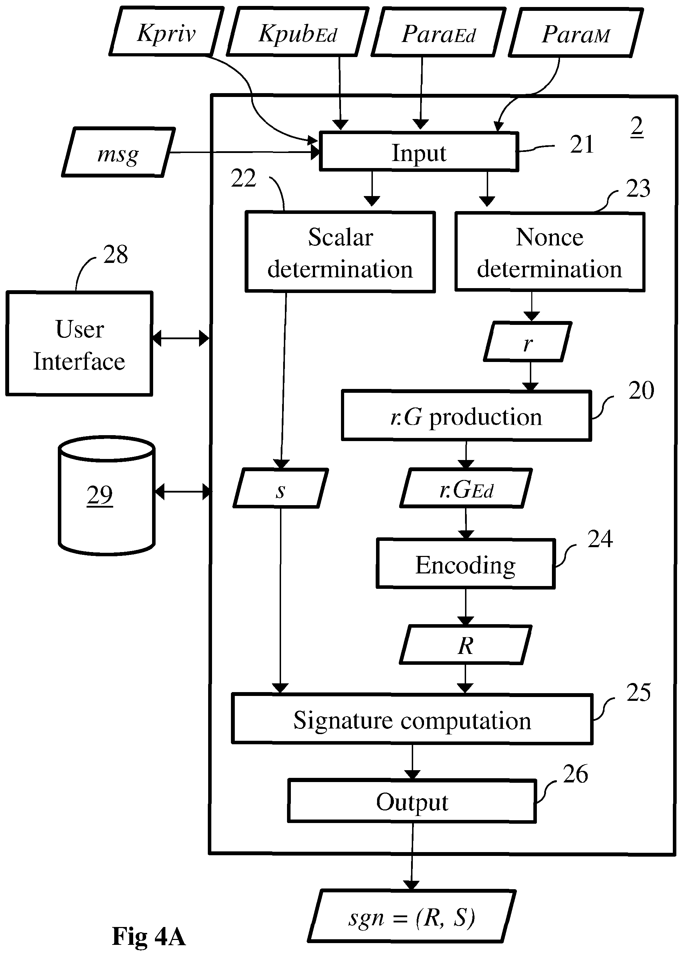

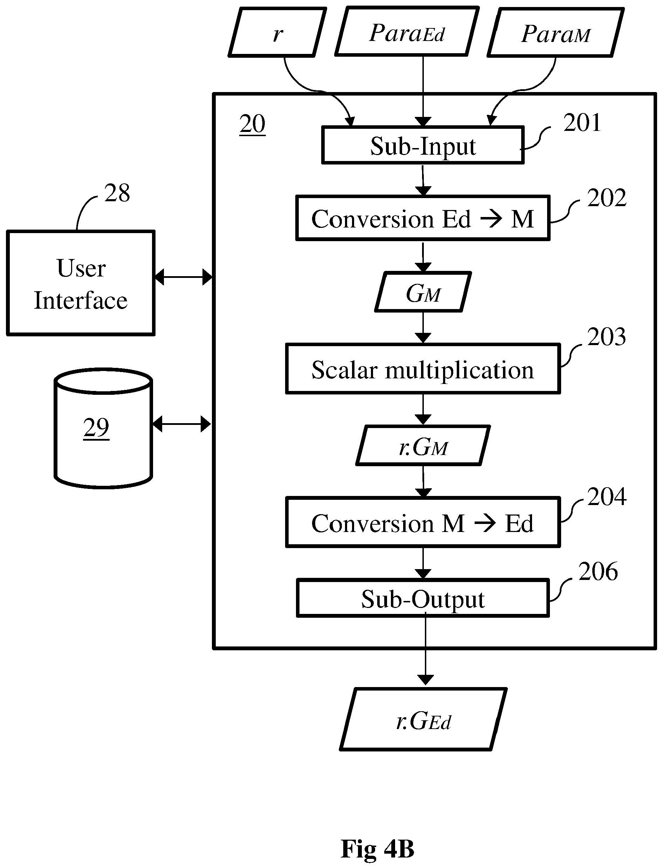

A device 2 for signature generation, as illustrated on **Figures 4A and 4B,** is interacting with a user interface 28 and one or more database(s) 29 in a similar way to the device 1 for public key generation.

The device 2 is adapted to be provided with a private key *Kpriv* and a message *msg,* as well as domain parameters $Para_{Ed}$ pertaining to a twisted Edwards curve and including notably a base point $G_{Ed}$. The device 2 is further adapted to receive domain parameters pertaining to a birationally equivalent Montgomery curve, $Para_M$, including notably a base point $G_M$, so that an isomorphism defined between the twisted Edwards curve and the Montgomery curve interlinks the base points $G_{Ed}$ and $G_M$.

The observations above about the device 1 regarding the private key *Kpriv,* and the domain parameters *Para$_{Ed}$* and *Para$_M$* with their related base points $G_{Ed}$ and $G_M$ stand likewise for the device 2, and will therefore not be repeated.

Optionally, the device 2 is also adapted to receive the public key *Kpub$_{Ed}$* corresponding to the private key *Kpriv* and based on the parameters *Para$_{Ed}$* associated with the concerned twisted Edwards curve. It may have been previously generated by the device 1, stored in the database(s) 29 and retrieved from that/those database(s) as needed for generating the signature *sgn.* Alternatively, it may have been determined or obtained in any other way insofar as the private key *Kpriv* and the public key *Kpub$_{Ed}$* form a key pair suited to message authentication.

The device 2 is further adapted to produce a signature *sgn* associated with the message *msg* and derived from the private key *Kpriv,* so that it can be authenticated later on by means of the corresponding public key *Kpub$_{Ed}$.* For example (see **Figure 2),** the device 2 is available to the entity α, which can thereby sign a message *msg* to be sent to entity β together with the related signature *sgn,* so that entity β can authenticate the message *msg* thanks to proper signature verification using the public key *Kpub$_{Ed}$.* In this respect, the entity β must already be in possession of the public key *Kpub$_{Ed}$* (see **Figure 1)** and share the same authentication references as the entity α, e.g. the ECC kind of elliptic curve and domain parameters *Para$_{Ed}$.*

The device 2 for signature generation includes an input module 21 adapted to receive the private key *Kpriv* and in some implementations the public key *Kpub$_{Ed}$*, the message *msg* and the domain parameters *Para$_{Ed}$* and *Para$_M$*, and an output module 26 adapted to provide the signature *sgn* associated with the message *msg,* in the form of a number (*R, S*) comprising two parts *R* and *S* as developed below.

Downstream of the input module 21, a module 23 for nonce determination is configured for determining a nonce r exploited in generating both parts Rand S of the signature *sgn.*

The device 2 also includes a module or sub-device 20, more developed below, for producing the scalar multiplication $r.G_{Ed}$.

A module 24 is configured for encoding the elliptic curve point resulting from that scalar multiplication $r.G_{Ed}$ to an encoded number forming the part *R* of the signature *sgn.*

In addition, a downstream module 25 for signature computation is configured for computing the signature S comprising the part R, as well the other part S derived from the private key *Kpriv,* the nonce r, the message *msg,* the base point order *n,* and that part R.

In some presently detailed modes, the signature generation is compliant with EdDSA processes. Accordingly and as known to a skilled person, the module 23 is configured for computing the nonce *r* by:

- applying to the private key *Kpriv* a cryptographic hash function, which may notably belong to the SHA family, so as to obtain a hash value *h,*
- selecting part of the bits of the hash value *h,* such as half of the bits representing the least significant bytes, or LSB, hereinafter noted *Prefix,*
- concatenating that part *Prefix* of the hash value *h* and the message *msg,* so as to obtain a number modulo the base point $G_{Ed}$ order *n,* i.e. (*Prefix* || msg) mod *n,*
- proceeding with a further hash operation, applied to the concatenated number, so as to obtain the nonce r.

The module 25 is then configured in the EdDSA process for:

- computing a number *k* by concatenating the part *R,* the public key *Kpub$_{Ed}$* and the message *msg,* and by applying a hash function to the resulting concatenation (*R* || *Kpub$_{Ed}$* || *msg*),
- deriving the part *S* of the signature *sgn* by computing (*r + k.s*) mod *n.*

The public key *Kpub$_{Ed}$* may be received directly by the device 2. In alternative embodiments, the device 2 is configured for computing the public key *Kpub$_{Ed}$*, which may be done through any method known to a skilled person, or as described above with the device 1. Implementations combining features of device 1 and device 2 will be more specifically developed below.

For example:

- the hash function is SHA-512,
- the part *Prefix* comprises the 32 LSB so that *Prefix* = h.32LSB,
- the nonce *r* = SHA-512(*Prefix* || *msg*) mod *n,*
- the signature part R is a 256-bits number obtained by encoding the result of the scalar multiplication $r.G_{Ed}$ and having affine coordinates (x, y), by selecting as b255 the sign bit of the x-coordinate, and as the b254...0 the y-coordinate,

- $k$ = SHA-512($R$ || $Kpub_{Ed}$ || $msg$),
- the signature part $S$ = ($r$ + $k.s$) mod $n$,
- signature $sgn$ = ($R, S$).

In alternative implementations, another authentication method than EdDSA is exploited. For example, the device 2 is configured for applying an ECDSA authentication procedure, including possibly (and as known to a skilled person) by the following specific functionalities with respect to the above:

- randomly generating with the module 23 the nonce r,
- with the module 24, calculating the curve point by the scalar multiplication $r.G_{Ed}$ with the module 20 and keeping as the first signature part $R$ the x-coordinate of that point mod $n$, and
- computing with the module 25 the most significant bits z of a hash value of the message $msg$ (the number of those bits corresponding to the order $n$) and the second signature part $S$ as $r^1$ ($z$ + $R.Kpriv$) mod $n$, which amounts to having the scalar s being worth the private key $Kpriv$, so that $sgn$ = ($R, S$).

Accordingly, contrary to the EdDSA scheme, the public key $Kpub_{Ed}$ is not exploited in ECDSA.

In alternative ECDSA modes, the module 23 is configured for generating the nonce deterministically from the private key $Kpriv$ and the message $msg$.

The device 2 may have multiple authentication capacities, and may thereby be able to execute e.g. EdDSA as well as ECDSA functionalities.

The sub-device 20 for producing the scalar multiplication $r.G_{Ed}$, as illustrated on **Figure 4B,** is configured for receiving data on the domain parameters $Para_{Ed}$ and $Para_M$ and the nonce $r$ by an sub-input module 201, optionally converting the base point $G_{Ed}$ to the base point $G_M$ by a module 202, carrying out the scalar multiplication $r.G_M$ by a scalar multiplication module 203, inducing by a conversion module 204 the scalar multiplication $r.G_{Ed}$ through a conversion of the elliptic curve point $r.G_M$ on the Montgomery curve to the elliptic curve point $r.G_{Ed}$ on the twisted Edwards curve, and providing the result of that multiplication by an sub-output module 206.

In some implementations, the domain parameters $Para_M$ of the Montgomery curve already include the base point $G_M$, which is available e.g. from the database(s) 29. The module 202 is then absent or inactivated.

In variant implementations, the sub-device 20 is configured for itself computing domain parameters of a Montgomery curve birationally equivalent to a concerned twisted Edwards curve, including the base point $G_M$. Those parameters may then be stored into the database(s) 29 and retrieved later on whenever useful in relation with that twisted Edwards curve.

Since its working may be the same as that of the sub-device 10, the reader is invited to refer to the above disclosure of the latter for further description.

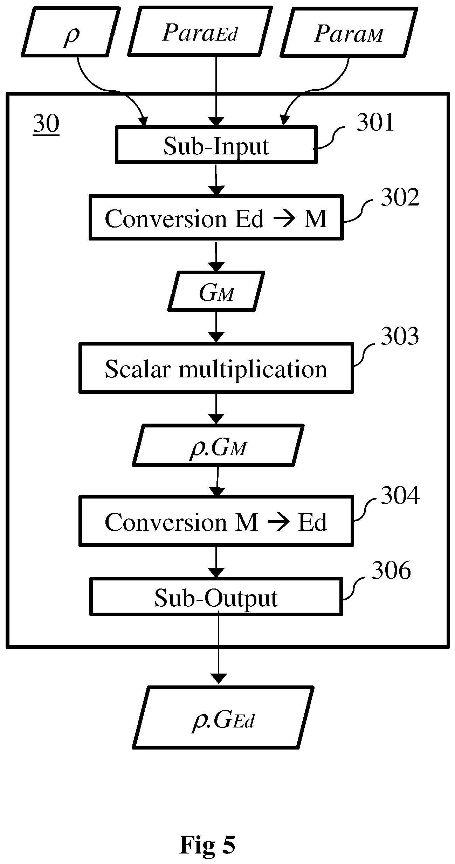

In fact, given the mechanisms potentially identical for carrying out the scalar multiplication $s.G_{Ed}$ by the sub-device 10 and the scalar multiplication $s.G_{Ed}$ by the sub-device 20, an identical entity may be exploited. This entity constituting a device or sub-device 30, as illustrated on **Figure 5,** may e.g. take the form of an autonomous functional (e.g. computer program) or structural (e.g. IC component) element. It may be integrated in a device for generating a public key like notably the device 1, in a device for generating a signature like notably the device 2, or mutually exploited in a device having both functionalities as described below.

The device 30 includes an input module 301 adapted to receive a scalar $\rho$ and the base point $G_M$, an optional module 302 for converting the base point $G_{Ed}$ to the base point $G_M$, a scalar multiplication module 303 configured for carrying out the scalar multiplication $\rho.G_M$, a conversion module 304 configured for inducing the scalar multiplication $\rho.G_{Ed}$ from converting the elliptic curve point $\rho.G_M$ on the Montgomery curve to the elliptic curve point $p.G_{Ed}$ on the twisted Edwards curve, and an output module adapted to provide the latter resulting point.

As will be clear to the reader, all observations above pertaining to the sub-device 10 and the sub-device 20 are also valid for the device 30, and will therefore not be repeated here.

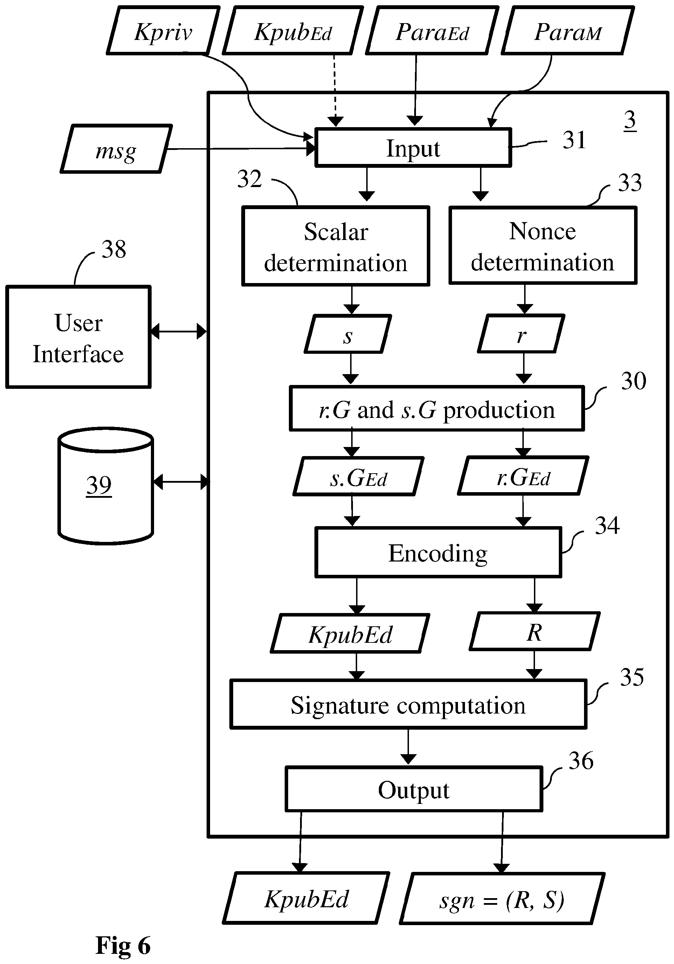

A device 3 combining the public key generation and signature generation, as illustrated on **Figure 6,** makes use of the sub-device 30 for determining both scalar multiplications $s.G_{Ed}$ and $r.G_{Ed}$.

Building on the previous definitions and features, the device 3 includes an input module 31 adapted to receive the private key $Kpriv$, the message $msg$, the domain parameters $Para_{Ed}$ and $Para_M$, and the public key $Kpub_{Ed}$ in relation with the private key $Kpriv$ when already available.

It further includes a module 32 for scalar determination and a module 33 for nonce determination, respectively configured for determining the scalar s and the nonce r.

The sub-device 30 is arranged downstream of the module 32 and the module 33, and is configured for receiving the relevant data on the domain parameters $Para_{Ed}$ and $Para_M$, including the base point $G_M$, the scalar s and the nonce r, and for producing the scalar multiplications $s.G_{Ed}$ and $r.G_{Ed}$ based on operation on the Montgomery curve.

The device 3 also includes an encoding module 34 configured for encoding $s.G_{Ed}$ to the public key $Kpub_{Ed}$

when not yet available, and for encoding $r.G_{Ed}$ to the signature part R.

The module 35 is configured for computing the signature *sgn* corresponding to the message *msg,* by receiving the signature part *R* and the public key $Kpub_{Ed}$ where appropriate for the authentication method (in particular for EdDSA), as well as the message *msg,* the nonce r, the scalar s and the base point order *n,* and for inducing the signature part S so that *sgn* = (*R, S*).

The device 3 further includes an output module 36 suited to providing the public key $Kpub_{Ed}$ and the signature *sgn* associated with the message *msg.*

In addition, the device 3 is interacting with a user interface 38 and one or more database(s) 39, similarly to those of the device 1 and device 2.

It deserves being observed that the operations pertaining to the production of the public key $Kpub_{Ed}$ and of the signature *sgn* are not necessarily executed in the frame of same steps, but may be done successively and selectively. For example, the device 3 may be used only for generating the public key $Kpub_{Ed}$ following the random generation of a new private key, *Kpriv,* so that the public key $Kpub_{Ed}$ be stored in the database(s) 39 until required for signature generation. The device 3 may instead be exploited solely for signature generation based on a previously computed public key $Kpub_{Ed}$, until it becomes necessary to renew the private key *Kpriv* or to compute a new public key $Kpub_{Ed}$ due to distinct domain parameters $Para_{Ed}$ associated with the exploited twisted Edwards curve. The device 3 may as well be jointly used for generating the public key $Kpub_{Ed}$ and the signature *sgn* for a given message *msg.*

In alternative embodiments, the twisted Edwards curve and the Montgomery curve being defined over a field of order *p,* the base point $G_M$ of the Montgomery curve is mapped to an *L*-multiple of the base point $G_{Ed}$ of the twisted Edwards curve by a degree-L isogeny, with L being an integer being worth 2 or more. The adjustment integer L is e.g. retrieved from the database 29 or 39, user-entered via the user interface 28 or 38, or received via the network Net.

The modules 22 and 23, or the modules 32 and 33, are then configured for replacing respectively the scalar s and the nonce value *r* with *s/L* mod *p* and with *r/L* mod *p,* so that the submodule 203 of the module 20 or the submodule 303 of the module 30 multiplies them by the base point $G_M$. In addition, the submodule 204 or 304 is then configured for converting the resulting points from the Montgomery curve to the twisted Edwards curve, by using the L-isogenous mapping instead of an isomorphism as above.The solutions developed above with the reverse mapping of the isomorphism correspond to a value 1 of the integer L.

The device 2 or the device 3 may be provided with the conversion functionalities associated with a single value of the integer L. In variants, it is provided with the conversion functionalities associated with at least two values, one of them being possibly L = 1. The device 2 or the device 3 may then be configured for selecting the integer L among the possible values, based e.g. on a user-entered command, or on data received via the network Net.

### *Device for signature verification*

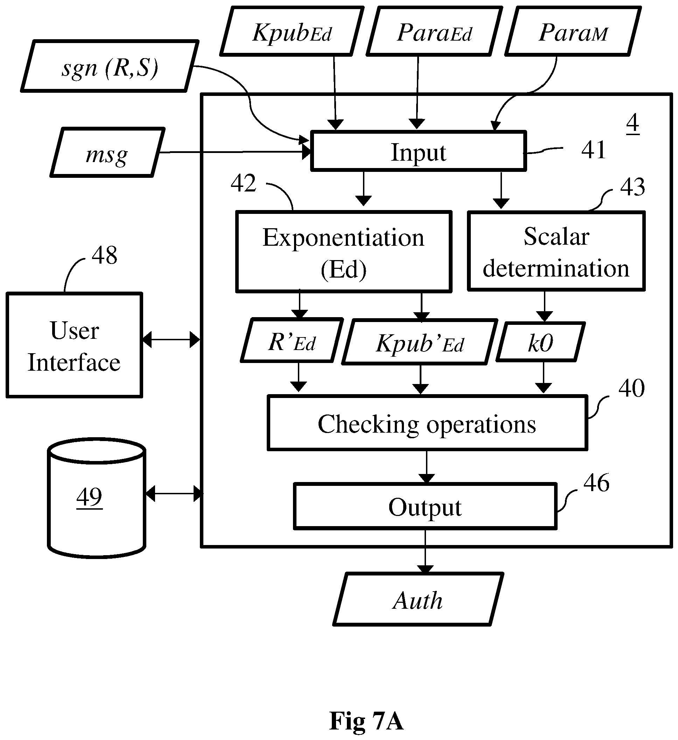

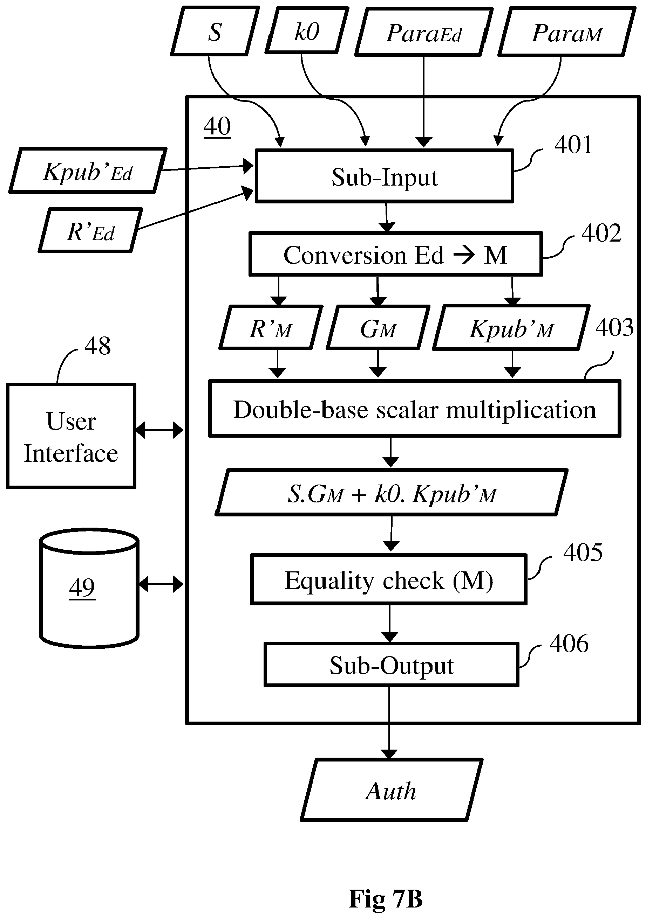

A device 4 for signature verification, as shown on **Figure 7A** and **Figure 7B,** may be exploited in cooperation with one of the device 1, device 2 and device 3, or without any relationship with such devices. It may notably be exploited by entity β when receiving a signed message *msg* from entity α for authenticating that message (see **Figure 2).**

The device 4 is interacting with a user interface 48 and one or more database(s) 49, in a similar way to the previously described devices 1, 2 and 3.

The device 4 is adapted to receive the message *msg* and an associated signature *sgn* including two parts R and S, as well as a public key $Kpub_{Ed}$ associated with the signature *sgn* and which may have been available to the entity β in a previous step (see **Figure 1).** The device 4 is further adapted to receive domain parameters $Para_{Ed}$ of a twisted Edwards curve and including notably a base point $G_{Ed}$, as well as parameters $Para_M$ including notably a base point $G_M$, corresponding to a Montgomery curve birationally equivalent to the considered twisted Edwards curve.

For example, the public key $Kpub_{Ed}$ and the message *msg* together with its signature *sgn* are received via the network(s) Net from the entity α, while the domain parameters $Para_{Ed}$ and $Para_M$ are available locally in the database(s) and can be extracted whenever required for authentication operations.

As known to a skilled person, while a private key may be determined randomly, the public key $Kpub_{Ed}$ and the signature *sgn* are closely linked to the authentication scheme, and in the present ECC case, depend notably on the domain parameters $Para_{Ed}$ and on the exploited ECC signing process, such as notably EdDSA or ECDSA. In this respect, flags or other indicators pointing to a selected kind of twisted Edwards curve and/or to the ECC signing process may also be received by the device 4, from entity α or from a centralized system. This may e.g. take the form of metadata in packet headers. In variant embodiments, the ECC modalities have already been agreed between the communicating entities so that a regular related transmission is not necessary.

The device 4 is configured for outputting an authentication decision, in the form of a binary outcome *Auth.* The latter is e.g. worth "True" or 1 if the authentication is successful, and "False" or 0 if it fails.

More precisely, the device 4 for signature verification includes an input 41 adapted to receive the message *msg*, signature *sgn,* public key $Kpub_{Ed}$ and domain parameters $Para_{Ed}$ and $Para_M$, and an output 46 adapted to produce the outcome *Auth.*

The device 4 is further provided with a module 42 for exponentiation, configured for reinstating in the considered twisted Edwards curve from the signature part R and the public key $Kpub_{Ed}$, respectively a check curve point $R'_{Ed}$ and a public key point $Kpub'_{Ed}$. This is typically done by reversing the encoding operations described above in relation with encoding modules 14, 24 and 34. For example, if the public key $Kpub_{Ed}$ is a 256-bits number generated by selecting in $s.G_{Ed}$ the sign bit of the x-coordinate as b255 and the y-coordinate as b254...0, the public key point $Kpub'_{Ed}$ is obtained by reconstituting the encoded (x, y) coordinates by retrieving y and by reconstituting x from the twisted Edwards curve equation and from its obtained x-sign. The encoding process may be already known to the device 4 as shared between communicating entities, or derived from an indicator transmitted e.g. by the entity $\alpha$ sending the public key $Kpub_{Ed}$ or the message *msg.*

The device 4 also includes a scalar determination module 44, configured for computing a scalar *k* from the received signature *sgn*, the public key $Kpub_{Ed}$, the message *msg* and the base point order *n*.

In particular modes, such as notably based on EdDSA schemes, the scalar *k* may be obtained by:

- concatenating the signature part *R*, the public key $Kpub_{Ed}$ and the message *msg,* and
- applying a hash function to that concatenated number and taking the resulting value modulo the base point order *n*, e.g. as

$$k = \text{SHA-512 } (R \parallel Kpub_{Ed} \parallel msg) \bmod n$$

A downstream sub-device 40 is configured for proceeding with operations pertaining to the checking of an equation, i.e. for verifying whether two computed terms are the same. If the response is yes, the outcome *Auth* is set to true, and if the response is no, it is set to false.

The authentication checking amounts to verifying that the following relationship is satisfied:

$$S.G_{Ed} + k0.Kpub'_{Ed} = R'_{Ed}, \qquad k0 = n - k \qquad (14)$$

The sub-device 40 is however configured for proceeding with that verification on the Montgomery curve instead of the twisted Edwards curve:

$$S.G_M + k0.Kpub'_M = R'_M, \quad k0 = n - k \qquad (15)$$

which arrives at the same outcome due to the isomorphism between those elliptic curves, $Kpub'_M$ and $R'_M$ being respective conversions of $Kpub'_{Ed}$ and $R'_{Ed}$ from the twisted Edwards curve to the corresponding Montgomery curve.

More precisely, the sub-device 40 includes a sub-input module 401 adapted to receive the signature part S, the check curve point $R'_{Ed}$ and the public key point $Kpub'_{Ed}$, the scalar *k0*, and the relevant information related to the domain parameters $Para_{Ed}$ and $Para_M$, and a sub-output module 406 adapted to provide the outcome *Auth.*

The sub-device 40 also includes a conversion module 402 configured for converting the check curve point $R'_{Ed}$ and the public key point $Kpub'_{Ed}$, from the twisted Edwards curve to respectively points $R'_M$ and $Kpub'_M$ in the Montgomery curve, a module 403 for computing the double-base scalar multiplication $S.G_M + k0.Kpub'_M$, and an equality check module 405 configured for verifying whether equation (15) is met or not, and for producing the proper resulting outcome *Auth.*

In some modes, the base point $G_M$ is already known and retrievable from the database(s) 49, so that the conversion module 402 does not need to proceed with its determination. In variant modes, the conversion module 402 is suited to computing the base point $G_M$ from a conversion of the base point $G_{Ed}$ from the twisted Edwards curve to the Montgomery curve, in addition to $R'_{Ed}$ and $Kpub'_{Ed}$.

The sub-device 40 makes possible substantial computational gains in some implementations, due to the potential efficiency of scalar multiplication on the Montgomery curve compared with the twisted Edwards curve. The module 403 for computing the double-base scalar multiplication may further exploit particularly efficient computation techniques directed to double-base scalar multiplications, rather than proceeding with the scalar multiplication of each term ($S.G_M$ and $k0.Kpub'_M$), and then with their addition. Such a method may notably include the "Shamir's trick", as described e.g. by C. Doche and L. Imbert in "The Double-Base Number System in Elliptic Curve Cryptography", 42nd Asilomar Conf. on Signals, Systems and Computers, pp. 777-780, Pacific Grove, Oct. 2008.

Also, proceeding with the equality check in the Montgomery curve instead of the twisted Edwards curve avoids additional operations that would be required for converting back the point data from the Montgomery curve to the twisted Edwards curve before such a verification.

Specific implementations are described below in relation with the selection of the coordinates system. In advantageous related modes, the conversion module 402 has the following functionalities. The check curve point $R'_{Ed}$ and the public key point $Kpub'Ed$ are respectively given by affine coordinates $(x_R, y_R)$, $(x_K, y_K)$ in the twisted Edwards curve. The latter are converted respectively to projective homogeneous coordinates $(U_R:V_R:Z_R)$ and $(U_K:V_K:Z_K)$ in the Montgomery curve, through the following conversion computations from Edwards affine coordinates $(x, y)$ to Montgomery projective coordinates $(U:V:Z)$:

$$
\begin{aligned}
U &= (1 + y)\,x \\
V &= c\,(1 + y) \\
Z &= (1 - y)\,x
\end{aligned}
\right\}
\qquad (16)
$$

The module 403 for computing the double-base scalar multiplication is then configured for executing the computations with the projective homogeneous coordinates, so as to obtain the curve point $S.G_M + k0.Kpub'_M$ expressed by projective homogeneous coordinates $(U0:V0:Z0)$ in the Montgomery curve.

Some implementations built on a modified version of the Montgomery ladder and those projective coordinates may offer particularly efficient processing. In such implementations, the scalar multiplication algorithm applied on the Montgomery curve exploits input projective homogeneous coordinates $(U:V:Z)$ of point $P$, instead of affine coordinates $(u, v)$ as usually done, together with the traditional first ladder point $P1$ and second ladder point $P2$ of respective homogeneous coordinates $(U1:V1:Z1)$ and $(U2:V2:Z2)$. The related algorithm for $P1$ recovery $(P1^{rec})$ is derived as follows from the Montgomery ladder on a Montgomery curve, where $P2 = P1 + P$, in reference to the presentation developed by K. Okeya and K. Sakurai in their above-cited article:

$$
\begin{aligned}
U1^{rec} &= 2B\,V.Z.Z1.Z2.U1 \\
V1^{rec} &= Z2\,[(U1.Z + U.Z1 + 2A\,Z.Z1)(U1.U + Z.Z1) - 2A\,Z^2.Z1^2] \\
&\qquad\qquad - (U1.Z - U.Z1)^2 U2 \\
Z1^{rec} &= 2B\,V.Z.Z1.Z2.Z1
\end{aligned}
\right\}
\qquad (17)
$$

so that the relation $(U1^{rec}:V1^{rec}:Z1^{rec}) = (U1:V1:Z1)$ holds.

A relevant algorithm may then be written:

INPUT: U, V, Z, U1, Z1, U2, Z2

OUTPUT: U1$^{rec}$, V1$^{rec}$, Z1$^{rec}$

| 1. | T0 | ← | Z.Z1 |
|----|----|----|----|
| 2. | T1 | ← | 2B |
| 3. | T1 | ← | T1.T0 |
| 4. | T1 | ← | T1.V |
| 5. | T1 | ← | T1.Z2 |
| 6. | U1$^{rec}$ | ← | T1.U1 |
| 7. | Z1$^{rec}$ | ← | T1.Z1 |
| 8. | T1 | ← | 2A |
| 9. | T2 | ← | U1.Z |
| 10. | T3 | ← | U.Z1 |
| 11. | T1 | ← | T1.T0 |
| 12. | T4 | ← | T1 + T2 |
| 13. | T4 | ← | T4 + T3 |
| 14. | T1 | ← | T1.T0 |
| 15. | T2 | ← | T2 - T3 |
| 16. | T2 | ← | T2.T2 |
| 17. | T2 | ← | T2.U2 |
| 18. | T3 | ← | U1.U |
| 19. | T3 | ← | T3 + T0 |

(continued)

| | | | |
|---|---|---|---|
| 20. | T0 | ← | T4.T3 |
| 21. | T0 | ← | T0 - T1 |
| 22. | T0 | ← | T0.Z2 |
| 23. | $V1^{rec}$ | ← | T0 - T2 |

As the skilled person will observe, that algorithm is obtained from the existing Montgomery ladder by multiplying the equations by $Z^2$.

Remarkably, that algorithm works without requiring modular inversion though the input Z does not equal 1, contrary to the usual Montgomery ladder scheme in which the input Z is set to 1. This proves particularly precious here given that the process is applied to induced points $R'_{Ed}$ and $Kpub'_{Ed}$ for which Z usually differs from 1.

In addition, a further significant property is that the input projective homogeneous coordinates U, V and Z are used instead of the affine coordinates u and v. This also makes possible computations without modular inversions, insofar as the curve points $R'_{Ed}$ and $Kpub'_{Ed}$ are given by their homogeneous coordinates (the latter being also exploited for the base point $G_M$).

In fact, the introduced algorithm requires merely 14 multiplications and 1 square without modular inversion, compared with 12 multiplications and 1 square with the Montgomery ladder scheme applied to Montgomery curves. Consequently, that adaptation may remain quite attractive compared with executing the scalar multiplications in the twisted Edwards curve.

Based on the exploitation of projective homogeneous coordinates, the module 405 is configured for directly verifying the truth of equality (15) in the Montgomery curve, without conversion back to the twisted Edwards curve nor transformation to affine coordinates, by:

$$U0.Z_R = U_R.Z0, \qquad V0.Z_R = V_R.Z0 \qquad\qquad (18)$$

Indeed, equations (18) amounts to checking that with affine coordinates (x0, y0) corresponding to projective homogeneous coordinates (U0:V0:Z0):

$$u0 = U0/Z0 = U_R/Z_R = u_R, \qquad v0 = V0/Z0 = V_R/Z_R = v_R$$

Accordingly, no modular inversion is involved in that verification of equations (18).

As a whole, by exploiting above-disclosed schemes relying on projective homogeneous coordinates, EdDSA signature verification may be performed end- to-end without any modular inversion.

Though the sub-device 40 is presently part of the device 4, it may be implemented in an autonomous form, functionally (e.g. dedicated software) and/or structurally (e.g. specific IC component).

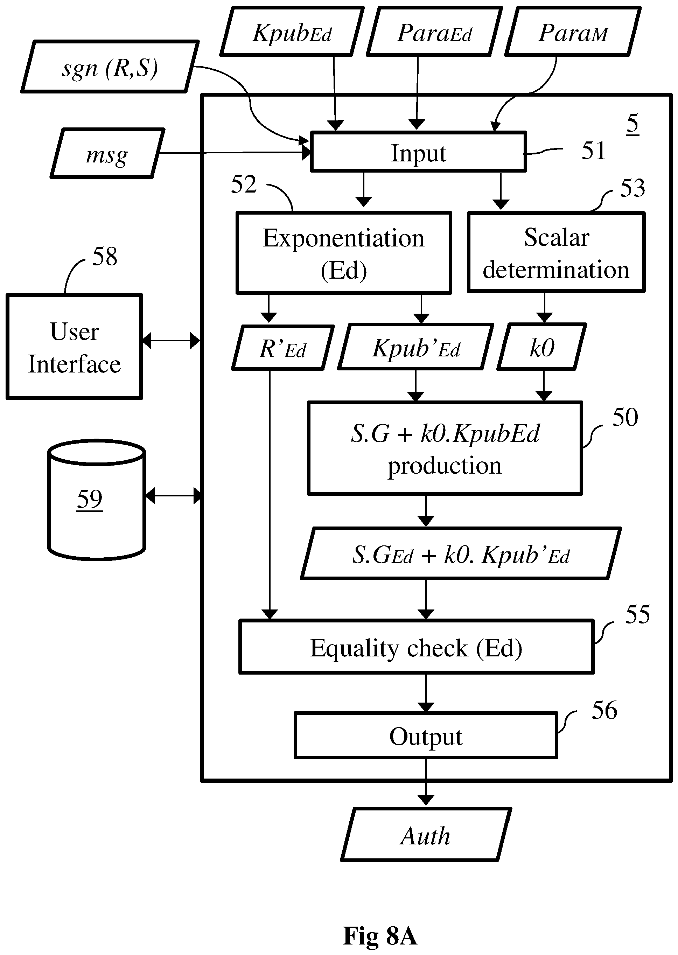

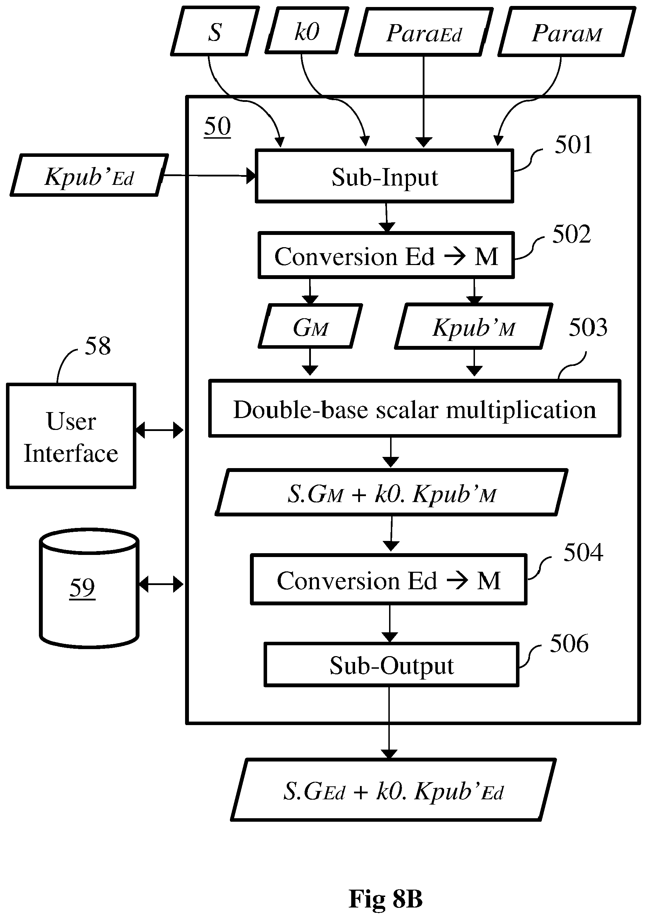

Other implementations pertaining to signature verification are described hereinafter, in relation with **Figure 8A** and **Figure 8B.** The device 5 for signature verification is similar to the device 4, but differs in that the equality check is performed on the twisted Edwards curve instead of the Montgomery curve.

Accordingly, the device 5 is interacting with a user interface 58 and database(s) 59 in a way similar to the device 4 with respectively the user interface 48 and the database(s) 49, and includes an input module 51, an exponentiation module 52, a scalar determination module 53 and an output module 56 respectively similar to the input module 41, exponentiation module 42, scalar determination module 43 and output module 46.

The device 5 also includes a sub-device 50 configured for determining the curve point $S.G_{Ed} + k0.Kpub'_{Ed}$, but via double-base scalar multiplications on the Montgomery curve instead of the twisted Edwards curve. A downstream module 55 for equality check is in charge of determining whether the equation (14) is satisfied based on the received curve point above, and for providing the authentication outcome *Auth*, as practiced for signature verifications on twisted Edwards curves.

By coming back to the twisted Edwards curve for the equality check instead of remaining on the Montgomery curve as previously done with the device 4, additional computations are required. However, there may be some interest in particular cases to proceed so, for taking advantage of existing systems - in which the verification is carried out on the twisted Edwards curve.

More precisely, as visible on **Figure 8B,** the sub-device 50 includes a sub-input module 501 and a sub-output module 506, a conversion module 502 configured for converting the public key point $Kpub'_{Ed}$ in the twisted Edwards curve to the public key point $Kpub'_M$ in the Montgomery curve, a module 503 in charge of proceeding with the double-base scalar multiplication $S.G_M + k0.Kpub'_M$ on the Montgomery curve, and a back-conversion module 504 configured for converting the resulting curve point to the twisted Edwards curve.

The conversion module 502 may further be adapted to convert the base point $G_{Ed}$ to the base point $G_M$ when the latter is not available, but does not require functionalities for converting the check curve point $R'_{Ed}$, since the latter is only exploited in the twisted Edwards curve, by the module 55 downstream of the sub-device 50.

In particular modes, the conversion module 502 is configured for converting the affine coordinates of the curve points in the twisted Edwards curve to projective homogeneous coordinates of those points expressed in the Montgomery curve, as previously done with the device 4. Likewise, the module 503 is configured for applying a modified Montgomery ladder in computing the double-base scalar product, as developed above.

In case the projective homogeneous coordinates are exploited, in particular implementations, the back-conversion module 504 is adapted to convert via equations (12) the curve point given by $S.G_M + k0.Kpub'_M$ to a corresponding curve point in the twisted Edwards curve, expressed there by projective homogeneous coordinates (U0:V0:Z0).

The equality check module 55 is then adapted to proceed directly with the verification of equation (14) on the twisted Edwards curve in projective coordinates, instead of switching to the affine coordinates before it. By considering the projective homogeneous coordinates in the twisted Edwards curve, (U0:V0:Z0) of the resulting curve point and ($U_R$:$V_R$:$Z_R$) of the check curve point $R'_{Ed}$, equations (18) needs to be verified for determining the authentication outcome *Auth*.

Accordingly, no modular inversion is involved in that verification of equations (18). In variant implementations, an ECDSA scheme is used instead of the EdDSA one. The scalar determination module 53 may then be in charge of determining the most significant bits $z$ of a hash value derived from the message *msg*, and of computing from the signature *(R, S)* two scalars $\rho1 = z.S^{-1} \mod n$ and $\rho2 = R.S^{-1} \mod n$.

The sub-device 50 is then adapted to convert the public key $Kpub'_{Ed}$ to the public key $Kpub'_M$ in the Montgomery curve, to proceed with a double-base scalar multiplication $\rho1\, G_M + p2\, Kpub'_M$, and to convert back to the twisted Edwards curve the result of those operations.

The module 55 is configured for verifying on the ground of the obtained curve point, which corresponds to the double-base scalar multiplication:

$$\rho1\ G_{Ed} + \rho2\ Kpub'_{Ed}$$

that its x-coordinate is congruent to $R$ modulo the base point order $n$. Depending on whether this congruence stands true or not, the signature is respectively valid or invalid.

As previously done with the EdDSA implementations, projective homogeneous coordinates may be advantageously exploited. In particular related embodiments, the affine coordinates in the twisted Edwards curve are converted to projective homogeneous coordinates in the Montgomery curve, the modified Montgomery ladder is applied for the scalar multiplications leading to:

$$\rho1\ G_M + \rho2\ Kpub'_M$$

and the resulting point is converting back to the twisted Edwards curve in projective homogeneous coordinates. The above verification can then be expressed on the ground of the resulting homogeneous coordinates (X:Y:Z') as the congruence of X/Z' to $R$ modulo $n$.

Though the sub-device 50 is presently part of the device 5, it may be implemented in an autonomous form, functionally (e.g. dedicated software) and/or structurally (e.g. specific IC component).

The device 4 or the device 5 may be integrated in a same system together with the device 1, the device 2 or the device 3, and share mutualized functionalities, notably for conversions between the twisted Edwards curve and the Montgomery curve and/or scalar multiplications on the Montgomery curve, e.g. part or whole of the modified Montgomery ladder.

*Authentication process*

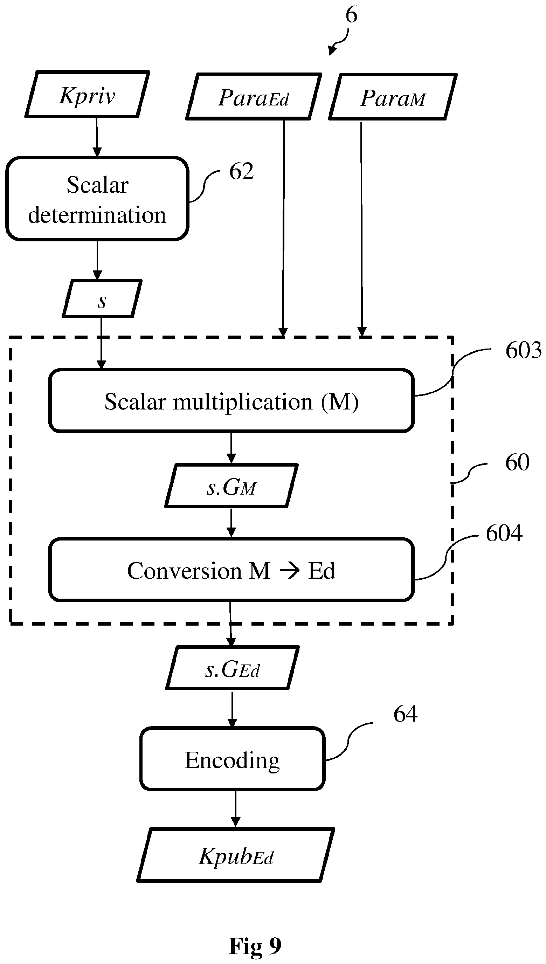

In operation, the device 1 for generating a public key $Kpub_{Ed}$ on a twisted Edwards curve having a base point $G_{Ed}$ and birationally equivalent to a Montgomery curve having an already available base point $G_M$ may for example execute the following process 6, in relation with **Figure 9:**

- determine a scalar s from the private key *Kpriv* (step 62),
- produce a result of the scalar multiplication $s.G_{Ed}$ (step 60), by computing on the Montgomery curve the point resulting from the scalar multiplication $S.G_M$ (step 603) and converting it to the Edwards curve (step 604),
- encode the resulting curve point to the public key $Kpub_{Ed}$ (step 64).

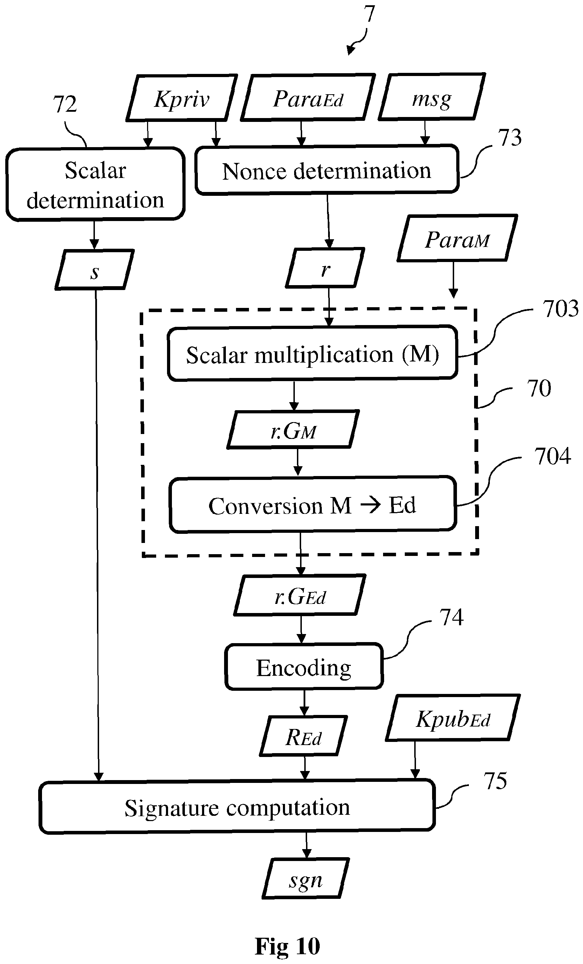

The device 2 or the device 3 for generating a signature *sgn* on a twisted Edwards curve having a base point $G_{Ed}$ and birationally equivalent to a Montgomery curve having an already available base point $G_M$ for a message *msg* and an already known public key $Kpub_{Ed}$ may for example (deterministic nonce value such as notably with EdDSA) execute the following process 7, in relation with **Figure 10:**

- determine a scalar s from the private key *Kpriv* (step 72),
- determine a nonce *r* from the private key *Kpriv*, the message *msg* and the base point order *n* (step 73),
- produce a result of the scalar multiplication $r.G_{Ed}$ (step 70), by computing on the Montgomery curve the point resulting from the scalar multiplication $r.G_M$ (step 703) and converting it to the Edwards curve (step 704),
- encode the resulting curve point to part *R* of the signature *sgn* (step 74),
- compute another part *S* of the signature *sgn* and hence the signature *sgn* = (*R, S*) by using the signature part *R*, the public key $Kpub_{Ed}$ (not exploited for ECDSA schemes), the message *msg*, the scalar *s*, the nonce *r* and the order *n* (step 75).

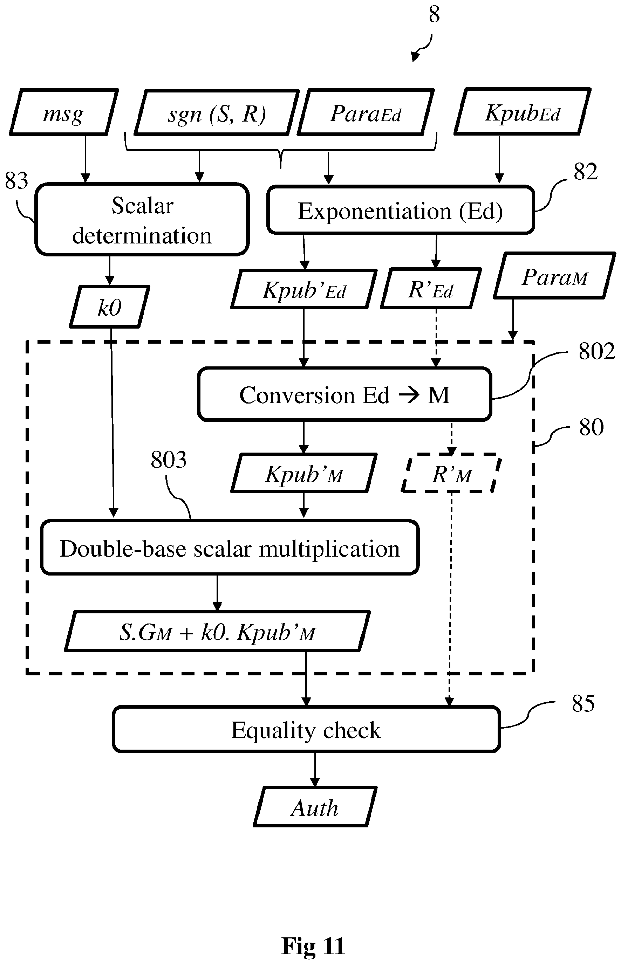

The device 4 or the device 5 for verifying a signature *sgn* = (*R, S*) on a twisted Edwards curve having a base point $G_{Ed}$ and birationally equivalent to a Montgomery curve having an already available base point $G_M$ for a message *msg* based on a public key $Kpub_{Ed}$ may for example (in an EdDSA scheme) execute the following process 8, in relation with **Figure 11:**

- decode the *R* part of the signature *sgn* to a check curve point $R'_{Ed}$ and the public key $Kpub_{Ed}$ to a public key point $Kpub'_{Ed}$ on the twisted Edwards curve by exponentiations (step 82),
- determine a scalar *k0* from the signature part *R*, the public key $Kpub_{Ed}$, the message *msg* and the base point order *n* (step 83),
- determine a curve point resulting from a double-base scalar multiplication on the Montgomery curve (step 80), by converting from the twisted Edwards curve to the Montgomery curve the public key point $Kpub'_{Ed}$ to $Kpub'_M$ and, as regards the device 4, the check curve point $R'_{Ed}$ to $R'_M$ (step 802) and carrying out the double-base scalar multiplication $S.G_M + k0.Kpub'_M$ on the Montgomery curve (step 803),
- produce an authentication outcome *Auth* establishing the truthfulness of equation $S.G_{Ed} + k0.Kpub'_{Ed} = R'_{Ed}$ based on the resulting curve point (step 85), either as regards the device 4, on the Montgomery curve ($S.G_M + k0.Kpub'_M = R'_M$) based on the resulting curve point and the converted check curve point $R'_M$, or as regards the device 5, on the twisted Edwards curve based on a back-conversion of the resulting curve point to the twisted Edwards curve.

### *Authentication apparatus*

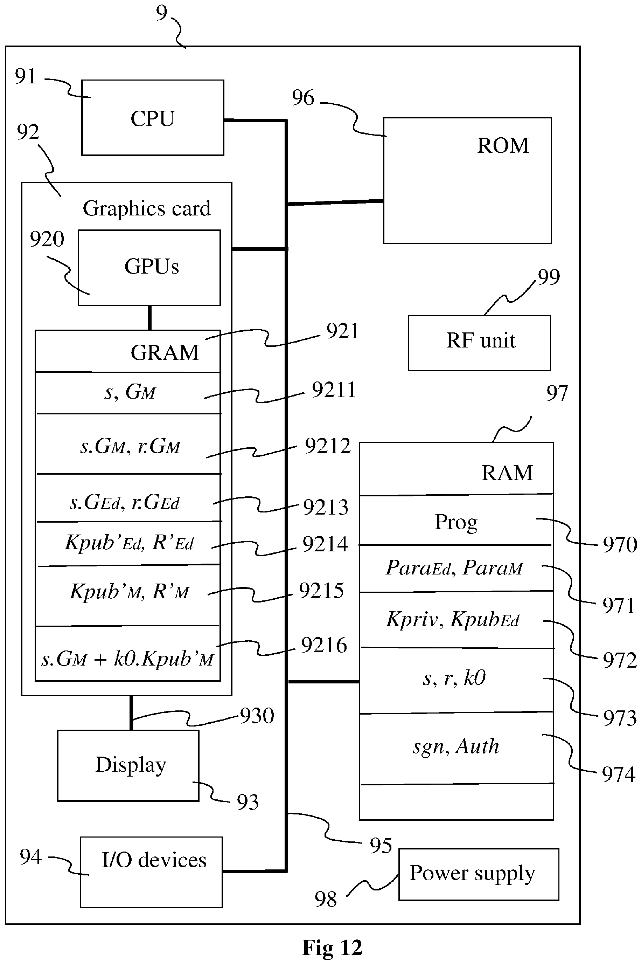

A particular apparatus 9, visible on **Figure 12,** is embodying the device 3 for public key and signature generation and 4 for signature verification as described above. It corresponds for example to a mainframe computer, a workstation, a laptop, a tablet, a smartphone, or a head-mounted display (HMD).
That apparatus 9 is suited to generating a public key, generating a signature and verifying a signature. It comprises the following elements, connected to each other by a bus 95 of addresses and data that also transports a clock signal:

- a microprocessor 91 (or CPU) ;
- a graphics card 92 comprising several Graphical Processing Units (or GPUs) 920 and a Graphical Random Access Memory (GRAM) 921; the GPUs are quite suited to repeated computations on cryptographic data, due to their highly parallel structure;

- a non-volatile memory of ROM type 96;
- a RAM 97;
- one or several I/O (Input/Output) devices 94 such as for example a keyboard, a mouse, a trackball, a webcam; other modes for introduction of commands such as for example vocal recognition are also possible;
- a power source 98; and
- a radiofrequency unit 99.

According to a variant, the power supply 98 is external to the apparatus 9.
The apparatus 9 also comprises a display device 93 of display screen type directly connected to the graphics card 92 to display digital communications associated with cryptographic processes carried out by the apparatus 9. The use of a dedicated bus 930 to connect the display device 93 to the graphics card 92 offers the advantage of having much greater data transmission bitrates and thus reducing the latency time for the displaying of digital communication contents. According to a variant, a display device is external to apparatus 9 and is connected thereto by a cable or wirelessly for transmitting the display signals. The apparatus 9, for example through the graphics card 92, comprises an interface for transmission or connection adapted to transmit a display signal to an external display means such as for example an LCD or plasma screen or a video-projector. In this respect, the RF unit 99 can be used for wireless transmissions.

It is noted that the word "register" used hereinafter in the description of memories 97 and 921 can designate in each of the memories mentioned, a memory zone of low capacity (some binary data) as well as a memory zone of large capacity (enabling a whole program to be stored or all or part of the data representative of data calculated or to be displayed). Also, the registers represented for the RAM 97 and the GRAM 921 can be arranged and constituted in any manner, and each of them does not necessarily correspond to adjacent memory locations and can be distributed otherwise (which covers notably the situation in which one register includes several smaller registers).

When switched-on, the microprocessor 91 loads and executes the instructions of the program contained in the RAM 97.

The random-access memory 97 comprises notably:

- in a register 970, the operating program of the microprocessor 91;
- in a register 971, the domain parameters of the twisted Edwards curve $Para_{Ed}$ and of the Montgomery curve $Para_M$;
- in a register 972, the private key $Kpriv$ and public key $Kpub_{Ed}$;
- in a register 973, the hash parameters, scalar $s$, nonce $r$, scalar $k0$;
- in a register 974, the signature $sgn$ and authentication outcome $Auth$.

Algorithms implementing the steps of the method specific to the present disclosure and described above are stored in the memory GRAM 921. When switched on and once the parameters 971 to 974 are loaded into the RAM 97, the graphic processors 920 of graphics card 92 load appropriate information and parameters into the GRAM 921 and execute the instructions of algorithms in the form of microprograms.

The random access memory GRAM 921 comprises notably:

- in a register 9211, the scalar s and base point $G_M$;
- in a register 9212, the scalar multiplication points $S.G_M$ and $r.G_M$;
- in a register 9213, the scalar multiplication points $s.G_{Ed}$ and $r.G_{Ed}$;
- in a register 9214, the exponentiations $Kpub'_{Ed}$ and $R'_{Ed}$;
- in a register 9215, the converted points $Kpub'_M$ and $R'_M$;
- in a register 9216, the double-base scalar multiplication $S.G_M + k0.Kpub'_M$.

As will be understood by a skilled person, the presence of the graphics card 92 is not mandatory, and can be notably replaced with entire CPU processing.

In variant modes, the apparatus 9 may include the functionalities of the device 1 for generating a public key, the device 2 for generating a signature and/or the device 5 for verifying a signature.

In addition, the devices 1 to 5 may be implemented differently than a standalone software, and an apparatus or set of apparatus comprising only parts of the apparatus 9 may be exploited, such as the functionalities of sub-devices 10, 20, 30, 40 and/or 50, which may be done e.g. locally or through an API call or via a secured cloud interface.

**Claims**

1. A device (1, 10; 3, 30) for generating a public key ($Kpub_{Ed}$) from a private key *(Kpriv)* in elliptic curve cryptography, said device including:

    - at least one input (11, 101; 31, 301) adapted to receive data (*Kpriv, h, s*) representative of said private key, and at least one parameter ($q$, $n$, $a$, $d$, $G_{Ed}$) defining a first elliptic curve (Ed25519) on a finite field having a field order ($p$) and a first base point ($G_{Ed}$) located on said first elliptic curve, said first elliptic curve being of a twisted Edwards curve type,
    - at least one processor configured for computing data ($s.G_{Ed}$, $Kpub_{Ed}$) representative of said public key ($Kpub_{Ed}$) from said data representative of said private key, by getting a scalar multiplication ($s.G_{Ed}$) on said first elliptic curve of said first base point ($G_{Ed}$) by a scalar (s) derived from said private key,

- at least one output (16, 106; 36, 306) adapted to provide said data representative of said public key for securing digital communications,

**characterized in that**:

- said at least one input is adapted to receive at least one parameter ($q, n, A, B, G_M$), defining a second elliptic curve (Curve25519) birationally equivalent to said first elliptic curve (Ed25519) via an isomorphism and a second base point ($G_M$) located on said second elliptic curve and corresponding to said first base point ($G_{Ed}$) with respect to said isomorphism, said second elliptic curve being of a Montgomery curve type,
- said at least one processor is configured for proceeding with a scalar multiplication ($s.G_M$; $s'.G_M$) on said second elliptic curve of said second base point ($G_M$) by at least one adjusted scalar ($s$; $s'$) among said scalar ($s$) derived from said private key and at least one division ($s'$) modulo said field order ($p$) of said scalar ($s$) by respectively at least one adjustment integer ($L$) greater than 1, said at least one adjustment integer being worth 1 when said adjusted scalar consists in said scalar, and for converting a resulting point of said scalar multiplication on said second elliptic curve to said scalar multiplication ($s.G_{Ed}$) on said first elliptic curve by at least one isogeny, said at least one isogeny having a degree equal to respectively said at least one adjustment integer and mapping said second base point to at least one scalar multiplication ($L.G_{Ed}$) of said first base point by respectively said at least one adjustment integer.

2. A device (2, 20; 3, 30) for generating a signature ($R, S$) associated with a message ($msg$) from a private key ($Kpriv$) in elliptic curve cryptography, said device including:

- at least one input (21, 201; 31, 301) adapted to receive data ($Kpriv, h, s, Prefix, r$) representative of said private key and of said message, and at least one parameter ($q, n, a, d, G_{Ed}$), defining a first elliptic curve (Ed25519) on a finite field having a field order ($p$) and a first base point ($G_{Ed}$) located on said first elliptic curve, said first elliptic curve being of a twisted Edwards curve type,
- at least one processor configured for computing data ($r.G_{Ed}, R, k, S$) representative of said signature from said data representative of said private key and of said message, by getting a scalar multiplication ($r.G_{Ed}$) on said first elliptic curve of said first base point ($G_{Ed}$) by a nonce value ($r$),
- at least one output (26, 206; 36, 306) adapted to provide said data representative of said signature for securing digital communications,

**characterized in that**:

- said at least one input is adapted to receive at least one parameter ($q, n, A, B, G_M$), defining a second elliptic curve (Curve25519) birationally equivalent to said first elliptic curve (Ed25519) via an isomorphism and a second base point ($G_M$) located on said second elliptic curve and corresponding to said first base point ($G_{Ed}$) with respect to said isomorphism, said second elliptic curve being of a Montgomery curve type,
- said at least one processor is configured for proceeding with a scalar multiplication ($r.G_M$; $s'.G_M$) on said second elliptic curve of said second base point ($G_M$) by at least one adjusted nonce value ($r$; $r'$) among said nonce value ($r$) and at least one division ($r'$) modulo said field order ($p$) of said nonce value ($r$) by respectively at least one adjustment integer ($L$) greater than 1, said adjustment integer being worth 1 when said adjusted nonce value consists in said nonce value, and for converting a resulting point of said scalar multiplication on said second elliptic curve to said scalar multiplication ($r.G_{Ed}$) on said first elliptic curve by at least one isogeny, said at least one isogeny having a degree equal to respectively said at least one adjustment integer and mapping said second base point to at least one scalar multiplication ($L.G_{Ed}$) of said first base point by respectively said at least one adjustment integer.

3. The device (3, 30) for generating a signature ($R, S$) according to claim 2, **characterized in that** said device for generating a signature includes a device for generating a public key compliant with claim 1.

4. The device (1, 10; 2, 20; 3, 30) according to any of the preceding claims, **characterized in that** said at least one processor is configured for proceeding with said scalar multiplication ($s.G_M, r.G_M, s'.G_M, r'.G_M$) on said second elliptic curve (Curve25519) in an expanded coordinate representation involving at least three coordinates (U:V:Z) instead of two coordinates (u, v) as in an affine representation, said expanded coordinate representation being adapted to switch between said affine representation on said first elliptic curve and said expanded coordinate representation on said second elliptic curve, so that said scalar multiplication on said second elliptic curve is effected in said expanded coordinate representation without modular inversion, and for converting said expanded coordinate representation of said resulting point ($s.G_M$, $r.G_M$; $s'.G_M$, $r'.G_M$) on said second elliptic curve to said affine representation of said scalar multiplication ($s.G_{Ed}$, $r.G_{Ed}$) on said first elliptic curve (Ed25519).

5. The device (1, 10; 2, 20; 3, 30) for generating a signature ($R$, $S$) according to claim 4, **characterized in that** said expanded coordinate representation is a projective coordinate representation, in which a point defined by said at least three coordinates is left unchanged by multiplying said at least three coordinates by a same coefficient, and said at least one processor is configured for converting with a single modular inversion said expanded coordinate representation of said resulting point ($s.G_M$, $r.G_M$; $s'.G_M$, $r'.GM$) on said second elliptic curve (Curve25519) to said affine representation of said scalar multiplication ($s.G_{Ed}$, $r.G_{Ed}$) on said first elliptic curve (Ed25519).

6. A device (4, 40; 5, 50) for verifying a signature ($R$, $S$) associated with a message ($msg$) from a public key ($Kpub_{Ed}$) in elliptic curve cryptography, said device including:

- at least one input (41, 401; 51, 501) adapted to receive data ($R$, $R'_{Ed}$, $S$, $Kpub_{Ed}$, $Kpub'_{Ed}$, $k0$) representative of said signature, of said public key and of said message, and at least one parameter ($q$, $n$, $a$, $d$, $G_{Ed}$) defining a first elliptic curve (Ed25519) and a first base point ($G_{Ed}$) located on said first elliptic curve, said first elliptic curve being of a twisted Edwards curve type, said signature ($R$, $S$) comprising a scalar part associated with a check value ($S$) and a curve point part ($R$) representative of a check curve point ($R'_{Ed}$) of said first elliptic curve, and said public key ($Kpub_{Ed}$) being representative of a public key point ($Kpub'_{Ed}$) of said first elliptic curve,
- at least one processor configured for verifying consistency between said signature and said message by an equality check corresponding to said first elliptic curve, involving terms based respectively on said signature curve point part ($R'_{Ed}$; $R$), on a scalar multiplication ($S.G_{Ed}$) of said first base point by a base point multiplier ($S$; $z.S^{-1}$ mod $n$) derived from at least said signature scalar part, and on a scalar multiplication ($k0.Kpub'_{Ed}$) of said public key point by a public key multiplier ($k0$; $R.S^{-1}$ mod $n$) derived from at least said signature curve point part ($R$), at least one ($k0$; $z.S^{-1}$ mod $n$) of said base point multiplier and public key multiplier being also derived from said message ($msg$),
- at least one output (46, 406; 56, 506) adapted to provide an authentication outcome ($Auth$) of said equality check for securing digital communications,

**characterized in that**:

- said at least one input is adapted to receive at least one parameter ($q$, $n$, $A$, $B$, $G_M$), defining a second elliptic curve (Curve25519) birationally equivalent to said first elliptic curve (Ed25519) via an isomorphism and a second base point ($G_M$) located on said second elliptic curve and corresponding to said first base point ($G_{Ed}$) with respect to said isomorphism, said second elliptic curve being of a Montgomery curve type,
- said at least one processor is configured for determining from said public key ($Kpub_{Ed}$) a converted public key point ($Kpub'_M$) of said second elliptic curve corresponding to said public key point ($Kpub'_{Ed}$) of said first elliptic curve with respect to said isomorphism, for proceeding with scalar multiplications ($S.G_M$, $k0.Kpub'_M$) on said second elliptic curve of said second base point ($G_M$) by said base point multiplier ($S$) and of said converted public key point ($Kpub'_M$) by said public key multiplier ($k0$), and for carrying out said equality check in a same one of said first elliptic curve (Ed25519) and second elliptic curve (Curve25519), on the ground of said scalar multiplications and of said check curve point ($R'_{Ed}$).

7. The device (4, 40) for verifying a signature ($R$, $S$) according to claim 6, **characterized in that** said at least one processor is configured for determining in said second elliptic curve (Curve25519) said converted public key point ($Kpub'_M$) and a converted check curve point ($R'_M$) corresponding to said check curve point ($R'_{Ed}$) of said first elliptic curve with respect to said isomorphism, in an expanded coordinate representation on said second elliptic curve involving at least three coordinates (U:V:Z), said expanded coordinate representation being adapted to switch between an affine representation involving two coordinates (x, y) on said first elliptic curve and said expanded coordinate representation on said second elliptic curve, and for proceeding without modular inversion with said scalar multiplications ($S.G_M$, $k0.Kpub'_M$) as well as said equality check in said expanded coordinate representation on said second elliptic curve.

8. The device (4, 40) for verifying a signature ($R$, $S$) according to claim 6 or 7, **characterized in that** said at least one processor is configured for converting without modular inversion an affine representation involving two coordinates (x, y) in said first elliptic curve of said public key point ($Kpub'_{Ed}$) to a projective homogeneous coordinate representation ($Kpub'_M$) in said second elliptic curve (Curve25519) involving at least three coordinates (U:V:Z), said projective homogeneous coordinate representation being such that a point defined by said at least three coordinates (U:V:Z) is left unchanged by multiplying said at least three coordinates by a same coefficient.

9. The device (4, 40) for for verifying a signature ($R$, $S$) according to claim 8, **characterized in that** said at least one processor is configured for proceeding with said scalar multiplications ($S.G_M$, $k0.Kpub'_M$) on said second elliptic curve (Curve25519) by a Montgomery ladder approach modified by processing coordinates (U1, Z1, U2, Z2, U, V, Z) entirely expressed in said projective homogeneous coordinate representation.

10. The device (4, 40; 5, 50) for verifying a signature ($R$, $S$) according to any of claims 6 to 9, **characterized in that** said at least one processor is configured for effecting on said first elliptic curve (Ed25519) via said second elliptic curve (Curve25519) an EdDSA procedure, said base point multiplier corresponding to said check value ($S$) and said public key multiplier being derived from said curve point part ($R$), said public key ($Kpub_{Ed}$) and said message ($msg$).

11. The device (1, 10; 2, 20; 3, 30; 4, 40; 5, 50) according to any of the preceding claims, **characterized in that** said first elliptic curve and said second elliptic curve are respectively birationally equivalent elliptic curves Ed25519 and Curve25519 over the prime field defined by the prime number $2^{255} - 19$, said first elliptic curve Ed25519 being defined in affine coordinates x, y by:

$$-x^2 + y^2 = 1 - (121665/121666)\ x^2\ y^2$$

and being associated with said first base point ($G_{Ed}$) having an ordinate y equal to 4/5, and said second elliptic curve Curve25519 being defined in affine coordinates u, v by:

$$v^2 = u^3 + 486662\ u^2 + u$$

and being associated with said second base point ($G_M$) having an abscissa u equal to 9.

12. A method (6) for generating a public key ($Kpub_{Ed}$) from a private key ($Kpriv$) in elliptic curve cryptography, said method including:

- receiving data ($Kpriv$, $h$, $s$) representative of said private key, and at least one parameter ($q$, $n$, $a$, $d$, $G_{Ed}$) defining a first elliptic curve (Ed25519) on a finite field having a field order ($p$) and a first base point ($G_{Ed}$) located on said first elliptic curve, said first elliptic curve being of a twisted Edwards curve type,
- computing (6, 60) with at least one processor, data ($s.G_{Ed}$, $Kpub_{Ed}$) representative of said public key ($Kpub_{Ed}$) from said data representative of said private key, by getting a scalar multiplication ($s.G_{Ed}$) on said first elliptic curve of said first base point ($G_{Ed}$) by a scalar ($s$) derived from said private key,
- providing said data representative of said public key for securing digital communications,

**characterized in that** said method includes:

- receiving at least one parameter ($q$, $n$, $A$, $B$, $G_M$), defining a second elliptic curve (Curve25519) birationally equivalent to said first elliptic curve (Ed25519) via an isomorphism and a second base point ($G_M$) located on said second elliptic curve and corresponding to said first base point ($G_{Ed}$) with respect to said isomorphism, said second elliptic curve being of a Montgomery curve type,
- with said at least one processor, proceeding (603) with a scalar multiplication ($s.G_M$; $s'.G_M$) on said second elliptic curve of said second base point ($G_M$) by an adjusted scalar ($s$; $s'$) among said scalar ($s$) derived from said private key and a division ($s'$) modulo said field order ($p$) of said scalar ($s$) by an adjustment integer ($L$) greater than 1, said adjustment integer being worth 1 when said adjusted scalar consists in said scalar, and converting (604) a resulting point of said scalar multiplication on said second elliptic curve to said scalar multiplication ($s.G_{Ed}$) on said first elliptic curve by an isogeny, said isogeny having a degree equal to said adjustment integer and mapping said second base point to a scalar multiplication ($L.G_{Ed}$) of said first base point by said adjustment integer,

said method (6, 60) for generating a public key ($Kpub_{Ed}$) being advantageously executed by a device (1, 10; 3, 30) for generating a public key ($Kpub_{Ed}$) according to any of claims 1, 4, 5 and 11.

13. A method (7) for generating a signature ($R$, $S$) associated with a message ($msg$) from a private key ($Kpriv$) in elliptic curve cryptography, said method including:

- receiving data ($Kpriv$, $h$, $s$, $Prefix$, $r$) representative of said private key and of said message, and at least one parameter ($q$, $n$, $a$, $d$, $G_{Ed}$), defining a first elliptic curve (Ed25519) on a finite field having a field order ($p$) and a first base point ($G_{Ed}$) located on said first elliptic curve, said first elliptic curve being of a twisted Edwards curve type,
- computing (7, 70) with at least one processor, data ($r.G_{Ed}$, $R$, $k0$, $S$) representative of said signature from said data representative of said private key and of said message, by getting a scalar multiplication ($r.G_{Ed}$) on said first elliptic curve of said first base point ($G_{Ed}$) by a nonce value ($r$),
- providing said data representative of said signature for securing digital communications,

**characterized in that** said method includes:

- receiving at least one parameter ($q$, $n$, $A$, $B$, $G_M$), defining a second elliptic curve (Curve25519) birationally equivalent to said first elliptic curve (Ed25519) via an isomorphism and a second base point ($G_M$) located on said second elliptic curve and corresponding to said first base point ($G_{Ed}$) with respect to said isomorphism, said second elliptic curve being of a Montgomery curve type,
- with said at least one processor, proceeding (703) with a scalar multiplication ($s.G_M$; $s'.G_M$) on said second elliptic curve of said second base point ($G_M$) by an adjusted nonce value ($r$; $r'$) among said nonce value ($r$) and a division ($r'$) modulo said field order ($p$) of said nonce value ($r$) by an adjustment integer ($L$) greater than 1, said adjustment integer being worth 1 when said adjusted nonce value consists in said nonce value, and converting (704) a resulting point of said scalar multiplication on said second elliptic curve to said scalar multiplication ($r.G_{Ed}$) on said first elliptic curve by an isogeny, said isogeny having a degree equal to said adjustment integer and mapping said second base point to a scalar multiplication ($L.G_{Ed}$) of said first base point by said adjustment integer,

said method (7, 70) for generating a signature ($R$, $S$) being advantageously executed by a device (2, 20; 3, 30) for generating a signature ($R$, $S$) according to any of claims 2 to 5 and 11.

14. A method (8, 80, 85) for verifying a signature ($R$, $S$) associated with a message ($msg$) from a public key ($Kpub_{Ed}$) in elliptic curve cryptography, said method including:

- receiving data ($R$, $R'_{Ed}$, $S$, $Kpub_{Ed}$, $Kpub'_{Ed}$, $k0$) representative of said signature, of said public key and of said message, and at least one parameter ($q$, $n$, $a$, $d$, $G_{Ed}$) defining a first elliptic curve (Ed25519) and a first base point ($G_{Ed}$) located on said first elliptic curve, said first elliptic curve being of a twisted Edwards curve type, said signature ($R$, $S$) comprising a scalar part associated with a check value ($S$) and a curve point part ($R$) representative of a check curve point ($R'_{Ed}$) of said first elliptic curve, and said public key ($Kpub_{Ed}$) being representative of a public key point ($Kpub'_{ED}$) of said first elliptic curve,
- verifying (85) with at least one processor, consistency between said signature and said message by an equality check consistency between said signature and said message by an equality check corresponding to said first elliptic curve, involving terms based respectively on said signature curve point part ($R'_{Ed}$; $R$), on a scalar multiplication ($S.G_{Ed}$) of said first base point by a base point multiplier ($S$; $z.S^{-1}$ mod $n$) derived from at least said signature scalar part, and on a scalar multiplication ($k0.Kpub'_{Ed}$) of said public key point by a public key multiplier ($k0$; $R.S^{-1}$ mod $n$) derived from at least said signature curve point part ($R$), at least one ($k0$; $z.S^{-1}$ mod $n$) of said base point multiplier and public key multiplier being also derived from said message ($msg$),
- providing an authentication outcome ($Auth$) of said equality check for securing digital communications,

**characterized in that** said method includes:

- receiving at least one parameter ($q$, $n$, $A$, $B$, $G_M$), defining a second elliptic curve (Curve25519) birationally equivalent to said first elliptic curve (Ed25519) via an isomorphism and a second base point ($G_M$) located on said second elliptic curve and corresponding to said first base point ($G_{Ed}$) with respect to said isomorphism, said second elliptic curve being of a Montgomery curve type,
- with said at least one processor, determining (82, 802) from said public key ($Kpub_{Ed}$) a converted public key point ($Kpub'_M$) of said second elliptic curve corresponding to said public key point ($Kpub'_{Ed}$) of said first elliptic curve with respect to said isomorphism, proceeding (803) with scalar multiplications ($S.G_M$, $k0.Kpub'_M$) on said second elliptic curve of said second base point ($G_M$) by said base point multiplier ($S$) and of said converted public key point ($Kpub'_M$) by said public key multiplier ($k0$), and for carrying out said equality check in a same one of said first elliptic curve (Ed25519) and second elliptic curve (Curve25519), on the ground of said scalar multiplications and of said check curve point ($R'_{Ed}$),

said method (8, 80, 85) for verifying a signature (R, S) being advantageously executed by a device (4, 40; 5, 50) for verifying a signature (R, S) according to any of claims 6 to 11.

15. A computer program comprising software code adapted to perform at least one of a method for generating a public key (A) according to claim 12, a method for generating a signature ($R$, $S$) according to claim 13 and a method for verifying a signature ($R$, $S$) according to claim 14 when said software code is executed by a processor.

Fig 1

Fig 2

Kpriv    ParaEd    ParaM

1

Input — 11

Scalar determination — 12

s

s.G production — 10

s.GEd

Encoding — 14

Output — 16

18

User Interface

19

KpubEd

**Fig 3A**

**Fig 3B**

**Fig 4A**

**Fig 4B**

$\rho$     *ParaEd*     *ParaM*

**30**

Sub-Input — 301

Conversion Ed → M — 302

*GM*

Scalar multiplication — 303

$\rho.GM$

Conversion M → Ed — 304

Sub-Output — 306

$\rho.GEd$

**Fig 5**

**Fig 6**

**Fig 7A**

**Fig 7B**

**Fig 8A**

**Fig 8B**

**Fig 9**

**Fig 10**

Fig 11

9

91 — CPU

92 — Graphics card

920 — GPUs

96 — ROM

99 — RF unit

97

921 — GRAM

9211 — $s, G_M$

9212 — $s.G_M, r.G_M$

9213 — $s.G_{Ed}, r.G_{Ed}$

9214 — $K_{pub'Ed}, R'_{Ed}$

9215 — $K_{pub'M}, R'_M$

9216 — $s.G_M + k0.K_{pub'M}$

RAM

Prog — 970

$Para_{Ed}, Para_M$ — 971

$K_{priv}, K_{pubEd}$ — 972

$s, r, k0$ — 973

$sgn, Auth$ — 974

930 — Display — 93

94 — I/O devices

95

98 — Power supply

**Fig 12**

Europäisches
Patentamt

European
Patent Office

Office européen
des brevets

# EUROPEAN SEARCH REPORT

**Application Number**

EP 22 20 6498

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GROSSSCHÄDL JOHANN ET AL: "Lightweight EdDSA Signature Verification for the Ultra-Low-Power Internet of Things", 17 December 2021 (2021-12-17), SPRINGER INTERNATIONAL PUBLISHING, PAGE(S) 263 – 282, XP047617485, * Algorithms 1, 2, 4 * * Section 1 * * Section 3 * * Section 4 * | 1-15 | INV. G06F21/60 H04L9/32 H04L9/30 |
| A | BERNSTEIN DANIEL J ET AL: "High-Speed High-Security Signatures", 28 September 2011 (2011-09-28), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 124 – 142, XP047309620, ISBN: 978-3-540-74549-5 * Section 2 * * Section 4 * * Section 5 * | 1-15 | |
| A | JOSEFSSON SJD AB I LIUSVAARA INDEPENDENT S: "Edwards-Curve Digital Signature Algorithm (EdDSA); rfc8032.txt", EDWARDS-CURVE DIGITAL SIGNATURE ALGORITHM (EDDSA); RFC8032.TXT, INTERNET ENGINEERING TASK FORCE, IETF; STANDARD, INTERNET SOCIETY (ISOC) 4, RUE DES FALAISES CH-1205 GENEVA, SWITZERLAND, 25 January 2017 (2017-01-25), pages 1-60, XP015117623, [retrieved on 2017-01-25] * Section 3 * * Section 5.1. * * Section 6 * | 1-15 | TECHNICAL FIELDS SEARCHED (IPC) G06F H04L |

The present search report has been drawn up for all claims

| Place of search | Date of completion of the search | Examiner |
|---|---|---|
| Munich | 4 April 2023 | Caragata, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. PORNIN.** Deterministic Usage of the Digital Signature Algorithm (DSA) and Elliptic Curve Digital Signature Algorithm (ECDSA). *RFC 6979 (Request For Comments),* 2013, ISSN 2070-1721
- **S. JOSEFSSON ; I. LIUSVAARA.** Edwards-Curve Digital Signature Algorithm (EdDSA). *IETF in RFC 8032,* 2017, ISSN 2070-1721
- **P. L. MONTGOMERY.** Speeding the Pollard and Elliptic Curve Methods of Factorization. *Math. of Computation,* 1987, vol. 48 (177), 243-264
- **A. LANGLEY et al.** Elliptic Curves for Security. *IETF in RFC 7748,* 2016, ISSN 2070-1721
- **K. OKEYA ; K. SAKURAI.** Efficient Elliptic Curve Cryptosystems from a Scalar Multiplication Algorithm with Recovery of the y-Coordinate on a Montgomery-Form Elliptic Curve. *CHES 2001, LNCS,* 2001, vol. 2162, 126-141
- **C. DOCHE ; L. IMBERT.** The Double-Base Number System in Elliptic Curve Cryptography. *42nd Asilomar Conf. on Signals, Systems and Computers,* October 2008, 777-780